(19) **Europäisches Patentamt**

**European Patent Office**

**Office européen des brevets**

(11) **EP 0 776 935 B1**

(12) **EUROPÄISCHE PATENTSCHRIFT**

(45) Veröffentlichungstag und Bekanntmachung des Hinweises auf die Patenterteilung:
**23.06.1999 Patentblatt 1999/25**

(51) Int Cl.[6]: **C08K 5/54**, C08G 77/04, C08L 83/04

(21) Anmeldenummer: **96119511.2**

(22) Anmeldetag: **05.12.1996**

(54) **Niedermolekulare Organosiliciumverbindungen, Verfahren zu deren Herstellung sowie deren Verwendung in vernetzbaren Organopolysiloxanmassen**

Low molecular weight silicon compounds, process for their preparation and their use in crosslinkable organopolysiloxane compositions

Composés siliciques à bas poids moléculaire, procédé pour leur préparation et leur emploi dans les compositions d'organopolysiloxan réticulables

(84) Benannte Vertragsstaaten:
**DE FR GB**

(30) Priorität: **05.12.1995 DE 19545363**

(43) Veröffentlichungstag der Anmeldung:
**04.06.1997 Patentblatt 1997/23**

(73) Patentinhaber: **Wacker-Chemie GmbH**
**81737 München (DE)**

(72) Erfinder:
• **Barthel, Herbert, Dr.**
**84547 Emmerting (DE)**
• **Schuster, Johann, Dr.**
**84547 Emmerting (DE)**
• **Weidner, Richard, Dr.**
**84489 Burghausen (DE)**
• **Stepp, Michael, Dr.**
**84489 Burghausen (DE)**

• **Frey, Volker, Dr.**
**84489 Burghausen (DE)**

(74) Vertreter: **Budczinski, Angelika et al**
**c/o Wacker-Chemie GmbH,**
**Hanns-Seidel-Platz 4**
**81737 München (DE)**

(56) Entgegenhaltungen:
EP-A- 0 367 222        EP-A- 0 480 680
EP-A- 0 518 057        EP-A- 0 645 395
WO-A-94/13741

• POLYMER JOURNAL, Bd. 16, Nr. 6, 1984, TOKYO JAPAN, Seiten 495-504, XP002027303 YOSHIKI CHUJO: "Synthesis and Application of Polymerizable Silicone Oligomers from Water Glass"

**Beschreibung**

Die Erfindung betrifft niedermolekulare Organosiliciumverbindungen, Verfahren zu deren Herstellung sowie deren Verwendung in vernetzbaren Organopolysiloxanmassen.

Der Begriff Organopolysiloxane soll im Rahmen der vorliegenden Erfindung dimere, oligomere und polymere Siloxane umfassen.

Niedermolekulare Organosiliciumverbindungen bestehend aus tetrafunktionellen Einheiten (Q-Einheiten) der Struktur $SiO_{4/2}$- und monofunktionellen Einheiten (M-Einheiten) der Struktur $R_3SiO_{1/2}$-, wie z.B. $(Me_3SiO)_4Si$ (CAS 3555-47-3) und $(Me_3SiO)_3SiOH$ (CAS 17477-97-3), $(Vinyl-Me_2SiO)_4Si$ (CAS 60111-54-8), $(Me_3SiO)_2Vinyl-SiOH$ (CAS 5356-84-3) und $(Me_3SiO)_2MeSiOH$ (CAS 17928-28-8), sind bereits bekannt (CAS: Chemical Abstracts Service). Ebenfalls ist bekannt, solche Verbindungen durch wässrig alkalischen Abbau von Kieselgelen, gefällten oder pyrogenen Kieselsäuren mit Alkylammoniumhydroxiden und anschließender Trimethylsilylierung herzustellen. Hierzu sei beispielsweise auf D. Hoebbel et al., Z. anorg. allg. Chem. <u>424</u> (1976) 115 verwiesen.

In DE-A-42 16 139 (Wacker-Chemie GmbH; ausgegeben am 18. November 1993) bzw. der entsprechenden US-Anmeldung mit der Seriennummer USSN 08/313192 werden MQ-Harze mit einem Verhältnis von M- zu Q-Einheiten von kleiner oder gleich 1 beschrieben. Diese MQ-Harze können anstelle hydrophobierter hochdisperser Kieselsäure als Füllstoffe in Siliconkautschuk verwendet werden. In DE-B 24 22 846 (Rhone-Poulenc S.A.; ausgegeben am 23. April 1976) bzw. den entsprechenden US-A 3,933,729 und US-A 3,983,265 werden kondensationsvernetzbare Organopolysiloxanmassen beschrieben, die zur Haftungsverbesserung 10 bis 50 Teile MQ-Harz mit einem Verhältnis von M- zu Q-Einheiten von kleiner oder gleich 1,2 aufweisen.

Gegenstand der Erfindung sind niedermolekulare Organosiliciumverbindungen mit 2 bis 17 Siliciumatomen aus Einheiten der Formel

$$R_a R^1{}_b (OR^2)_c SiO_{4-(a+b+c)/2} \tag{I},$$

wobei

R gleich oder verschieden sein kann und Wasserstoffatom oder gegebenenfalls substituierter, SiC-gebundener aliphatisch gesättigter Kohlenwasserstoffrest mit 1 bis 18 Kohlenstoffatomen bedeutet, wobei pro Siliciumatom maximal ein Rest R die Bedeutung von Wasserstoffatom haben kann,

$R^1$ gleich oder verschieden sein kann und SiC-gebundener, aliphatisch ungesättigter Kohlenwasserstoffrest mit 2 bis 18 Kohlenstoffatomen bedeutet,

$R^2$ gleich oder verschieden sein kann und Wasserstoffatom oder gegebenenfalls substituierter Kohlenwasserstoffrest mit 1 bis 18 Kohlenstoffatomen, der mit Sauerstoffatomen unterbrochen sein kann, bedeutet,

a 0, 1, 2 oder 3 ist,

b 0, 1, 2 oder 3 ist,

c 0, 1, 2 oder 3 ist,

die Summe aus a, b und c in Formel (I) kleiner oder gleich 3 ist und pro Molekül mindestens ein Rest $R^1$ anwesend ist, dadurch gekennzeichnet, daß es sich um solche handelt ausgewählt aus
Verbindungen der Formel

$$(R_3SiO)_d \, (R_2R^1SiO)_e \, (OH)_f \, Si \tag{Ia},$$

wobei

d 0, 1, 2 oder 3 ist,

e 1, 2 oder 3 ist,

f 0, 1 oder 2 ist und

die Summe d+e+f gleich 4 ist,
und
Verbindungen der Formel

$$[(R_3SiO)_g (R_2R^1SiO)_h (OH)_i Si]_2 O \qquad\qquad (Ib),$$

wobei

g    gleich oder verschieden sein kann und 0, 1, 2 oder 3 ist,
h    gleich oder verschieden sein kann und 0, 1, 2 oder 3 ist,
i    gleich oder verschieden sein kann und 0, 1 oder 2 ist und

die Summe $g+h+i$ an einem jeden Siliciumatom gleich 3 ist und pro Molekül mindestens ein Rest $R^1$ anwesend ist.

Beispiele für Kohlenwasserstoffreste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Cycloalkylreste, wie Cyclopentyl-, Cyclohexyl-, Cycloheptylreste und Methylcyclohexylreste; Arylreste, wie der Phenyl-, Biphenyl-, Naphtyl- und Anthryl- und Phenanthrylrest; Alkarylreste, wie o-, m-, p-Tolylreste, Xylylreste und Ethylphenylreste; Aralkylreste, wie der Benzylrest, der α- und der β-Phenylethylrest.

Beispiele für substituierte Kohlenwasserstoffreste R sind halogenierte Alkylreste, wie der 3-Chlorpropyl-, der 3,3,3-Trifluorpropyl- und der Perfluorhexylethylrest, halogenierte Arylreste, wie der p-Chlorphenyl- und der p-Chlorbenzylrest.

Bevorzugt handelt es sich bei Rest R um Wasserstoffatom und Kohlenwasserstoffreste mit 1 bis 8 Kohlenstoffatomen, besonders bevorzugt um den Methylrest.

Beispiele für Reste $R^1$ sind der Vinyl-, Allyl-, Methallyl-, 1-Propenyl-, 1-Butenyl-, 1-Pentenylrest, 5-Hexenyl-, Butadienyl-, Hexadienyl-, Cyclopentenyl-, Cyclopentadienyl-, Cyclohexenyl-, Ethinyl-, Propargyl- und 1-Propinylrest.

Bevorzugt handelt es sich bei Rest $R^1$ um Alkenylreste mit 2 bis 8 Kohlenstoffatomen, besonders bevorzugt um den Vinylrest.

Beispiele für gegebenenfalls substituierte Kohlenwasserstoffreste $R^2$ sind die für R und $R^1$ als Beispiele angegebenen Reste sowie Alkoxyalkylreste, wie der Methoxyethylrest und der Ethoxyethylrest.

Bevorzugt handelt es sich bei Rest $R^2$ um Wasserstoffatom und Alkylreste mit 1 bis 8 Kohlenstoffatomen, besonders bevorzugt um Wasserstoffatom, Methyl- und Ethylrest, insbesondere um Wasserstoffatom.

Die erfindungsgemäßen niedermolekularen Organosiliciumverbindungen weisen vorzugsweise ein Molekulargewicht von höchstens 1000 g/mol auf, besonders bevorzugt von höchstens 500 g/mol.

Bevorzugt handelt es sich bei den erfindungsgemäßen niedermolekularen Organosiliciumverbindungen der Formel (Ia) um $(R_3SiO)(R_2R^1SiO)_3Si$, $(R_3SiO)_2 (R_2R^1SiO)_2Si$, $(R_3SiO)_3(R_2R^1SiO)Si$, $(R_3SiO) (R_2R^1SiO)_2SiOR^2$, $(R_3SiO)_2(R_2R^1SiO)SiOR^2$ und $(R_2R^1SiO)_3SiOR^2$, wobei R, $R^1$ und $R^2$ die oben angegebene Bedeutung haben.

Besonders bevorzugt handelt es sich bei den erfindungsgemäßen niedermolekularen Organosiliciumverbindungen der Formel (Ia) um $(R_3SiO)(R_2R^1SiO)_3Si$ und $(R_2R^1SiO)_3SiOR^2$, wobei R, $R^1$ und $R^2$ die oben angegebene Bedeutung haben.

Beispiele für die erfindungsgemäßen Organosiliciumverbindungen gemäß Formel (Ia) sind $(Me_3SiO)(Me_2ViSiO)_3Si$, $(Me_3SiO)_2(Me_2ViSiO)_2Si$, $(Me_3SiO)_2(Me_2ViSiO)_2Si$, $(Me_3SiO)(Me_2ViSiO)_2SiOH$, $(Me_3SiO)_2(Me_2ViSiO)SiOH$ und $(Me_2ViSiO)_3SiOH$ mit Me gleich Methylrest und Vi gleich Vinylrest.

Bevorzugt handelt es sich bei den erfindungsgemäßen niedermolekularen Organosiliciumverbindungen der Formel (Ib) um $(R_2R^1SiO)_3Si-O-Si(R_2R^1SiO)_3$ $(R_3SiO)(R_2R^1SiO)_2Si-O-Si(R_2R^1SiO)_3$, $(R_3SiO)_2(R_2R^1SiO)Si-O-Si(R_2R^1SiO)_3$, $(R_3SiO)(R_2R^1SiO)_2Si-O-Si(R_3SiO)(R_2R^1SiO)_2$ $(R_2R^1SiO)_3Si-O-Si(R_3SiO)_3$, $(R_3SiO)(R_2R^1SiO)_2Si-O-Si(R_3SiO)_2(R_2R^1SiO)$ $(R_3SiO)_3Si-O-Si(R_3SiO)(R_2R^1SiO)_2$ $(R_3SiO)_2(R_2R^1SiO)Si-O-Si(R_3SiO)_2(R_2R^1SiO)$ $(R_3SiO)_3Si-O-Si(R_3SiO)_2(R_2R^1SiO)$ $(R_2R^1SiO)_3Si-O-Si(R_2R^1SiO)_2(OR^2)$, $(R_2R^1SiO)_3Si-O-Si(R_2R^1SiO)(OR^2)(R_3SiO)$, $(R_3SiO)(R_2R^1SiO)_2Si-O-Si(R_2R^1SiO)_2(OR^2)$, $(R_2R^1SiO)_3Si-O-Si(OR^2)(R_3SiO)_2$, $(R_3SiO)(R_2R^1SiO)_2Si-O-Si(R_3SiO)(R_2R^1SiO)(OR^2)$, $(R_3SiO)_2(R_2R^1SiO)Si-O-Si(R_2R^1SiO)_2(OR^2)$, $(R_3SiO)(R_2R^1SiO)_2Si-O-Si(R_3SiO)_2(OR^2)$, $(R_2R^1SiO)_2(OR^2)Si-O-Si(R_3SiO)_3$, $(R_3SiO)_2(R_2R^1SiO)Si-O-Si(R_3SiO)(R_2R^1SiO)(OR^2)$, $(R_3SiO)_2(R_2R^1SiO)Si-O-Si(R_3SiO)_2(OR^2)$ und $(R_3SiO)_3Si-O-Si(R_3SiO)(OR^2)(R_2R^1SiO)$, wobei R, $R^1$ und $R^2$ die oben angegebene Bedeutung haben.

Besonders bevorzugt handelt es sich bei den erfindungsgemäßen niedermolekularen Organosiliciumverbindungen der Formel (Ib) um $(R_2R^1SiO)_3Si-O-Si(R_2R^1SiO)_3$ $(R_3SiO)(R_2R^1SiO)_2Si-O-Si(R_2R^1SiO)_3$ und $(R_2R^1SiO)_3Si-O-Si(R_2R^1SiO)_2(OR^2)$, wobei R, $R^1$ und $R^2$ die oben angegebene Bedeutung haben.

Beispiele für die erfindungsgemäßen niedermolekularen Organosiliciumverbindungen der Formel (Ib) sind $(Me_2ViSiO)_3Si-O-Si(Me_2ViSiO)_3$ $(Me_3SiO)(Me_2ViSiO)_2Si-O-Si(Me_2ViSiO)_3$, $(Me_3SiO)_2(Me_2ViSiO)Si-O-Si(Me_2ViSiO)_3$, $(Me_3SiO)(Me_2ViSiO)_2Si-O-Si(Me_3SiO)(Me_2ViSiO)_2$, $(Me_3SiO)_3Si-O-Si(Me_2ViSiO)_3$, $(Me_3SiO)_2$

$(Me_2ViSiO)Si-O-Si(Me_3SiO)(Me_2ViSiO)_2$, $(Me_3SiO)_3Si-O-Si(Me_3SiO)(Me_2ViSiO)_2$, $(Me_3SiO)_2(Me_2ViSiO)Si-O-Si$ $(Me_3SiO)_2(Me_2ViSiO)$, $(Me_3SiO)_3Si-O-Si(Me_3SiO)_2(Me_2ViSiO)$, $(Me_2ViSiO)_3Si-O-Si(Me_2ViSiO)_2(OH)$, $(Me_2ViSiO)_3Si-O-Si(Me_3SiO)(Me_2ViSiO)(OH)$, $(Me_3SiO)(Me_2ViSiO)_2Si-O-Si(Me_2ViSiO)_2(OH)$, $(Me_2ViSiO)_3Si-O-Si(Me_3SiO)_2(OH)$, $(Me_3SiO)(Me_2ViSiO)_2SiOSi(Me_3SiO)(Me_2ViSiO)(OH)$, $(Me_3SiO)_2(Me_2ViSiO)SiOSi(Me_2ViSiO)_2(OH)$, $(Me_3SiO)$ $(Me_2ViSiO)_2SiOSi(Me_3SiO)_2(OH)$, $(OH)(Me_2ViSiO)_2SiOSi(Me_3SiO)_3$, $(Me_3SiO)_2(Me_2ViSiO)SiOSi(Me_3SiO)$ $(Me_2ViSiO)(OH)$, $(Me_3SiO)_2(Me_2ViSiO)Si-O-Si(Me_3SiO)_2(OH)$ und $(Me_3SiO)_3SiOSi(Me_3SiO)(Me_2ViSiO)(OH)$ mit Me gleich Methylrest und Vi gleich Vinylrest.

Die erfindungsgemäßen niedermolekularen Organosiliciumverbindungen enthalten pro Molekül bevorzugt mindestens zwei Reste $R^1$ mit $R^1$ gleich der obengenannten Bedeutung.

Zur Herstellung der erfindungsgemäßen niedermolekularen Organosiliciumverbindungen bzw. der erfindungsgemäß eingesetzten Organosiliciumverbindungen aus Einheiten der Formel (I) können in der Silikonchemie bekannte Verfahrensweisen angewendet werden. Beispielsweise können die erfindungsgemäßen niedermolekularen Organosiliciumverbindungen aus Tetraorganylammonium-Silikatlösungen hergestellt werden, wie z.B. in D. Hoebbel et al., Z. anorg. allg. Chem. 424 (1976) 115 ff beschrieben.

Nach einer bevorzugten Verfahrensweise (Verfahren 1) wird in einer 1. Stufe ein Gemisch aus monofunktionellen Silanen $R_2R^1SiCl$ und gegebenenfalls $R_3SiCl$, Tetrachlorsilan und/oder Organotrichlorsilan sowie gegebenenfalls Organodichlorsilan mit Alkanolen mit 1 bis 4 Kohlenstoffatomen, insbesondere Ethanol, bei einer Temperatur von vorzugsweise 0 bis 80°C, besonders bevorzugt 20°C, und einem Druck von bevorzugt 900 bis 1100 hPa umgesetzt, das Reaktionsgemisch unter Zugabe von Wasser in einer Menge von vorzugsweise 80 bis 300 Gewichtsprozent, besonders bevorzugt 100 bis 200 Gewichtsprozent, jeweils bezogen auf das Gewicht des Reaktionsgemischs, hydrolysiert und die so erhaltenen niedermolekularen Siloxane aus der organischen Phase isoliert, wobei R und $R^1$ die oben angegebene Bedeutung haben.

Bei der erfindungsgemäßen Umsetzung liegt das molare Verhältnis an monofunktionellen Silanen $R_2R^1SiCl$ und gegebenenfalls $R_3SiCl$ zu Tetrachlorsilan und/oder Organotrichlorsilan bevorzugt zwischen 1,6 : 1 und 10 : 1, besonders bevorzugt zwischen 1,8 : 1 und 9 : 1. Gegebenenfalls kann auch Organodichlorsilan mitverwendet werden. Falls Organodichlorsilan mitverwendet wird, so wird es in Mengen von maximal 30 Mol%, besonders bevorzugt maximal 20 Mol-%, jeweils bezogen auf Tetrachlorsilan und/oder Organotrichlorsilan, eingesetzt.

Nach der Hydrolyse wird vorzugsweise die wässrige Phase von der organischen Phase abgetrennt und die organische Phase zur Entfernung von noch vorhandener Säure mit Wasser neutralgewaschen, wobei anschließend die organische Phase von nichtflüchtigen Bestandteilen bei einer Temperatur von bevorzugt 80 bis 160°C und einem Druck von 30 bis 600 hPa, besonders bevorzugt bei einer Temperatur von 100 bis 150°C und einem Druck von 50 bis 500 hPa, befreit wird.

Die so erhaltenen niedermolekularen Organosiliciumverbindungen können dann in einer 2. Stufe mit Disiloxanen der Formel $R_3Si-O-SiR_3$ und/oder $R_2R^1Si-O-SiR^1R_2$ und/oder $R_3Si-O-SiR^1R_2$ mit R und $R^1$ gleich den oben angegebenen Bedeutungen in Mengen von vorzugsweise 60 bis 200 Gewichtsprozent, besonders bevorzugt 90 bis 180 Gewichtsprozent, jeweils bezogen auf die niedermolekularen Organosiliciumverbindungen, in Gegenwart eines sauren Katalysators bei einer Temperatur von bevorzugt 20 bis 200°C, besonders bevorzugt 40 bis 100°C, und dem Druck der umgebenden Atmosphäre umgesetzt werden, wobei nach Beendigung der Reaktion der saure Katalysator entfernt wird.

Beispiele für die in der 2. Stufe des erfindungsgemäßen Verfahrens 1 eingesetzten sauren Katalysatoren sind Lewis-Säuren, wie $BF_3$, $AlCl_3$, $FeCl_3$ und Phosphonitrilchlorid, sowie Brönstedt-Säuren, wie Salzsäure, Schwefelsäure, Phosphorsäure, Essigsäure und p-Toluolsulfonsäure, sowie saure Ionenaustauscher, wie Zeolithe und säureaktivierte Bleicherde, wobei säureaktivierte Bleicherde bevorzugt ist.

In der 2. Stufe des erfindungsgemäßen Verfahrens 1 wird saurer Katalysator in Mengen von vorzugsweise 1 bis 20 Gewichtsprozent, besonders bevorzugt 2 bis 15 Gewichtsprozent, jeweils bezogen auf das Gesamtgewicht der eingesetzten Organosiliciumverbindungen, angewendet.

Nach Beendigung der erfindungsgemäßen Reaktion gemäß 2. Stufe wird der Katalysator durch Filtration von der Reaktionsmasse abgetrennt, sofern es sich um einen in der Reaktionsmasse unlöslichen Katalysator, wie beispielsweise die säureaktivierte Bleicherde, handelt. Andernfalls erfolgt die Entfernung des Katalysators von der Reaktionsmasse durch Neutralisation und anschließender Filtration des entstandenen Salzes. In jedem Fall wird das Filtrat dann von niedrigflüchtigen Bestandteilen vorzugsweise bei einer Temperatur von 80 bis 160°C und einem Druck von 30 bis 600 hPa, besonders bevorzugt bei 100 bis 150°C und 50 bis 500 hPa, befreit.

Nach einer anderen bevorzugten Verfahrensweise (Verfahren 2) wird Siliciumdioxid mit einem Triorganylsilylierungsmittel in Mengen von bevorzugt 5 bis 200 Gewichtsteilen, besonders bevorzugt 20 bis 100 Gewichtsteilen, jeweils bezogen auf 100 Gewichtsteile Siliciumdioxid, in Anwesenheit von wässriger Base in Mengen von bevorzugt 0,5 bis 200 Gewichtsteilen, besonders bevorzugt 10 bis 100 Gewichtsteilen, jeweils bezogen auf 100 Gewichtsteile Siliciumdioxid, umgesetzt.

Die Umsetzung des erfindungsgemäßen Verfahrens 2 wird bevorzugt bei einer Temperatur 0 bis 250°C, besonders bevorzugt 20 bis 100°C, und dem Druck der umgebenden Atmosphäre durchgeführt.

Bei dem erfindungsgemäß eingesetzten Triorganylsilylierungsmittel handelt es sich vorzugsweise um $R_3SiOH$ bzw. $R_3SiOSiR_3$, $R_2R^1SiOH$ bzw. $R_2R^1SiOSiR_2R^1$ und $R_3SiNHSiR_3$ sowie $R_2R^1SiNHSiR_2R^1$.

Bei der wäßrigen Base handelt es sich bevorzugt um Gemische aus 5 bis 25 Gewichtsteilen Ammoniak in 100 Gewichtsteilen Wasser. Die wässrige Base kann jedoch auch durch Umsetzung eines Gemisches von Wasser und Hexaorganyldisilazan direkt während der erfindungsgemäßen Umsetzung hergestellt werden.

Die erfindungsgemäße Umsetzung kann, falls erwünscht, in einem gegenüber den Reaktionsteilnehmern inerten, organischen Lösungsmittel, wie zum Beispiel Alkanen, aromatischen Kohlenwasserstoffen und Halogenkohlenwasserstoffen, oder gegenüber den Reaktionsteilnehmern inerten Organosiliciumverbindungen, wie z.B. Hexamethyldisiloxan, durchgeführt werden.

Bei dem erfindungsgemäßen Verfahren 2 werden als Siliciumdioxid bevorzugt feinteilige Kieselsäuren, durch naßchemische Fällung hergestellte Kieselsäuren oder pyrogen durch Flammenhydrolyse, z.B. von Tetrachlorsilan, hergestellte Kieselsäuren, verwendet, wobei pyrogen hergestellte hochdisperse Kieselsäuren besonders bevorzugt sind.

Vorzugsweise haben die erfindungsgemäß eingesetzten Kieselsäuren eine mittlere Primärteilchen-Partikelgröße von maximal 250 nm, besonders bevorzugt von maximal 100 nm, insbesondere 2 bis 50 nm.

Vorzugsweise haben die erfindungsgemäß eingesetzten Kieselsäuren eine spezifische Oberfläche (gemessen nach BET, Methode gemäß DIN 66131 und DIN 66132) von größer 25 $m^2/g$, besonders bevorzugt von 50 bis 400 $m^2/g$.

Nach erfolgter Umsetzung, vorzugsweise nach 0,5 bis 60 Stunden, werden gegebenenfalls unter Rühren, bevorzugt bei einer Temperatur von 100 bis 140°C und dem Druck der umgebenden Atmosphäre, die leichtflüchtigen Stoffe abgetrennt und im Anschluß daran, bevorzugt bei 140 bis 220°C und dem Druck der umgebenden Atmosphäre oder reduziertem Druck, gegebenenfalls unterstützt durch einen Inertgasstrom, wie Stickstoffgas, die erfindungsgemäß hergestellten, niedermolekularen Organosiliciumverbindungen destillativ vom Rückstand abgetrennt.

Nach einer anderen bevorzugten Verfahrensweise (Verfahren 3) werden in einer ersten Stufe Chlorsiloxane und/oder Chlorsilane, wie z.B. solche gemäß DE-A 39 18 337 (Wacker-Chemie GmbH) bzw. der entsprechenden US 5,011,962, mit Siloxanolen und/oder Silanolen in Gegenwart von Base sowie gegebenenfalls organischem aprotischen Lösungsmittel umgesetzt, wobei Chloratome durch Silyl- und/oder Siloxyreste ersetzt werden. Falls das so erhaltene Reaktionsprodukt noch Si-gebundene Chloratome enthält, wird dieses in einer zweiten Stufe mit Wasser in Gegenwart von Base sowie gegebenenfalls organischem aprotischen Lösungsmittel umgesetzt, wobei die Si-gebundenen Chloratome durch Si-gebundene Hydroxylgruppen ersetzt werden.

Bei der im erfindungsgemäßen Verfahren 3 eingesetzten Base handelt es sich vorzugsweise um organische Amine, wie Alkylamine, wie etwa Triethylamin, aromatische Amine, wie Pyridin, und deren Salze sowie um basische Salze, wie Natriumhydrogencarbonat und Kaliumcarbonat.

In der ersten Stufe des erfindungsgemäßen Verfahrens 3 wird Base bevorzugt in einem stöchiometrischen Überschuß von 0,5 bis 300 %, besonders bevorzugt in einem Überschuß von 10 bis 100 %, bezüglich Si-gebundenem Chlor, eingesetzt.

In der gegebenenfalls durchgeführten zweiten Stufe des erfindungsgemäßen Verfahrens 3 wird Base bevorzugt in einem stöchiometrischen Überschuß von 0,5 bis 300 %, besonders bevorzugt in einem Überschuß von 10 bis 100 %, bezüglich Si-gebundenem Chlor, eingesetzt.

Die erfindungsgemäße Umsetzung gemäß Verfahren 3 kann, falls erwünscht, in einem gegenüber den Reaktionsteilnehmern inerten, organischen aprotischen Lösungsmittel, wie zum Beispiel Toluol, Cyclohexan, Tetrahydrofuran und Diethylether, durchgeführt werden.

Die Umsetzung des erfindungsgemäßen Verfahrens 3 wird bevorzugt bei einer Temperatur -10°C bis 100°C, besonders bevorzugt Raumtemperatur bis 80°C, und dem Druck der umgebenden Atmosphäre durchgeführt.

Nach erfolgter Umsetzung wird das erhaltene Produkt nach bekannten Methoden, wie Phasentrennung, neutral Waschen mit Wasser und Destillation bei reduziertem Druck, isoliert.

Die erfindungsgemäßen niedermolekularen Organosiliciumverbindungen der Formeln (Ia) und (Ib) werden besonders bevorzugt gemäß erfindungsgemäßem Verfahren 3 hergestellt.

Die erfindungsgemäßen bzw. erfindungsgemäß hergestellten niedermolekularen Organosiliciumverbindungen können für alle Zwecke eingesetzt werden, für die auch bisher niedermolekulare Organosiliciumverbindungen eingesetzt worden sind.

Besonders eignen sie sich für die Herstellung von vernetzbaren Organopolysiloxanmassen.

Ein weiterer Gegenstand der vorliegenden Erfindung sind vernetzbare Massen auf der Basis von Organopolysiloxanen, dadurch gekennzeichnet, daß sie zusätzlich zu Organopolysiloxanen mindestens eine niedermolekulare Oganosiliciumverbindung mit 2 bis 17 Siliciumatomen aus Einheiten der Formel

$$R_a R^1{}_b (OR^2)_c SiO_{4-(a+b+c)/2} \qquad (I)$$

enthalten, wobei

R, $R^1$, $R^2$, a, b und c eine der oben angegebenen Bedeutungen haben, mit der Maßgabe, daß die Summe aus a, b und c in Formel (I) kleiner oder gleich 3 ist und pro Molekül mindestens ein Rest $R^1$ anwesend ist, bevorzugt mindestens zwei Reste $R^1$, besonders bevorzugt mindestens drei Reste $R^1$, insbesondere mindestens vier Reste $R^1$.

Die erfindungsgemäß eingesetzten niedermolekularen Organosiliciumverbindungen bestehen vorzugsweise aus M-Einheiten, d.h. Einheiten der Formel (I) mit a+b=3 sowie Q-Einheiten, d.h. Einheiten der Formel (I) mit a+b=0, und/oder T-Einheiten, d.h. Einheiten der Formel (I) mit a+b=1.

Die erfindungsgemäß eingesetzten niedermolekularen Organosiliciumverbindungen weisen ein Molekulargewicht von bevorzugt höchstens 2500 g/Mol, besonders bevorzugt höchstens 1000 g/Mol, insbesondere höchstens 500 g/Mol, auf.

Die erfindungsgemäß eingesetzten niedermolekularen Organosiliciumverbindungen weisen vorzugsweise ein zahlenmäßiges Verhältnis von M-Einheiten zu der Summe der Q-Einheiten und/oder T-Einheiten von größer oder gleich 2 auf, bevorzugt größer oder gleich 2,5.

Besonders bevorzugt weisen die erfindungsgemäß eingesetzten niedermolekularen Organosiliciumverbindungen 4 bis 10 Siliciumatome auf.

Bei den erfindungsgemäß eingesetzten niedermolekularen Organosiliciumverbindungen kann es sich um eine einzelne Art wie um ein Gemisch aus mindestens zwei verschiedenen Arten derartiger Organosiliciumverbindungen handeln.

Beispiele für die erfindungsgemäß eingesetzten Organosiliciumverbindungen sind $(Me_3SiO)(Me_2ViSiO)_3Si$, $(Me_3SiO)_2(Me_2ViSiO)_2Si$, $(Me_2ViSiO)_4Si$, $(Me_3SiO)(Me_2ViSiO)_2SiOH$, $(Me_2ViSiO)_3SiOH$, $(Me_2ViSiO)_3Si-O-Si(Me_2ViSiO)_3$ $(Me_3SiO)(Me_2ViSiO)_2Si-O-Si(Me_2ViSiO)_3$, $(Me_3SiO)_2(Me_2ViSiO)Si-O-Si(Me_2ViSiO)_3$, $(Me_3SiO)(Me_2ViSiO)_2Si-O-Si(Me_3SiO)(Me_2ViSiO)_2$, $(Me_3SiO)_3Si-O-Si(Me_2ViSiO)_3$, $(Me_3SiO)_2(Me_2ViSiO)Si-O-Si(Me_3SiO)(Me_2ViSiO)_2$, $(Me_3SiO)_3Si-O-Si(Me_3SiO)(Me_2ViSiO)_2$, $(Me_3SiO)_2(Me_2ViSiO)Si-O-Si(Me_3SiO)_2(Me_2ViSiO)$, $(Me_2ViSiO)_3Si-O-Si(Me_2ViSiO)_2(OH)$, $(Me_2ViSiO)_3Si-O-Si(Me_3SiO)(Me_2ViSiO)(OH)$, $(Me_3SiO)(Me_2ViSiO)_2Si-O-Si(Me_2ViSiO)_2(OH)$, $(Me_2ViSiO)_3Si-O-Si(Me_3SiO)_2(OH)$, $(Me_3SiO)(Me_2ViSiO)_2SiOSi(Me_3SiO)(Me_2ViSiO)(OH)$, $(Me_3SiO)_2(Me_2ViSiO)SiOSi(Me_2ViSiO)_2(OH)$, $(Me_3SiO)(Me_2ViSiO)_2SiOSi(Me_3SiO)_2(OH)$, $(OH)(Me_2ViSiO)_2SiOSi(Me_3SiO)_3$, $(Me_3SiO)_2(Me_2ViSiO)SiOSi(Me_3SiO)(Me_2ViSiO)(OH)$, $[ViMe_2SiO]_2[Me_3SiO]SiMe$, $[ViMe_2SiO]_3SiMe$, $[ViMe_2SiO]_2MeSiOH$, $[ViMe_2SiO][Me_3SiO]_2SiVi$, $[ViMe_2SiO]_2[Me_3SiO]SiVi$, $[ViMe_2SiO]_3SiVi$, $[ViMe_2SiO][Me_3SiO]ViSiOH$ und $[ViMe_2SiO]_2ViSiOH$, wobei Me gleich Methylrest und Vi gleich Vinylrest bedeutet.

Vorzugsweise handelt es sich bei den erfindungsgemäß eingesetzten niedermolekularen Organosiliciumverbindungen um $(Me_3SiO)(Me_2ViSiO)_3Si$, $(Me_2ViSiO)_4Si$, $(Me_2ViSiO)_3SiOH$, $(Me_2ViSiO)_3Si-O-Si(Me_2ViSiO)_3$ $(Me_3SiO)(Me_2ViSiO)_2Si-O-Si(Me_2ViSiO)_3$, $(Me_3SiO)_2(Me_2ViSiO)Si-O-Si(Me_2ViSiO)_3$, $(Me_3SiO)(Me_2ViSiO)_2Si-O-Si(Me_3SiO)(Me_2ViSiO)_2$, $(Me_3SiO)_3Si-O-Si(Me_2ViSiO)_3$, $(Me_3SiO)_2(Me_2ViSiO)Si-O-Si(Me_3SiO)(Me_2ViSiO)_2$, $(Me_2ViSiO)_3Si-O-Si(Me_2ViSiO)_2(OH)$, $(Me_2ViSiO)_3Si-O-Si(Me_3SiO)(Me_2ViSiO)(OH)$, $(Me_3SiO)(Me_2ViSiO)_2Si-O-Si(Me_2ViSiO)_2(OH)$, $(Me_2ViSiO)_3Si-O-Si(Me_3SiO)_2(OH)$, $(Me_3SiO)(Me_2ViSiO)_2SiOSi(Me_3SiO)(Me_2ViSiO)(OH)$, $(Me_3SiO)_2(Me_2ViSiO)SiOSi(Me_2ViSiO)_2(OH)$, $[ViMe_2SiO]_3SiMe$, $[ViMe_2SiO]_2[Me_3SiO]SiVi$, $[ViMe_2SiO]_3SiVi$ und $[ViMe_2SiO]_2ViSiOH$, wobei Me gleich Methylrest und Vi gleich Vinylrest bedeutet.

Besonders bevorzugt handelt es sich bei den erfindungsgemäß eingesetzten niedermolekularen Organosiliciumverbindungen um $[ViMe_2SiO]_3SiOH$, $[ViMe_2SiO]_4Si$, $[ViMe_2SiO]_3[Me_3SiO]Si$, $[ViMe_2SiO]_3SiMe$ und $[ViMe_2SiO]_3SiVi$, wobei Me gleich Methylrest und Vi gleich Vinylrest bedeutet.

Bei den erfindungsgemäßen Massen kann es sich um beliebige, bisher bekannte Typen von zu Elastomeren vernetzbaren Organopolysiloxanmassen handeln, wie beispielsweise einkomponentige oder zweikomponentige bei Raumtemperatur (sog. RTV-Massen) oder erhöhter Temperatur (sog. HTV-Massen) vulkanisierende Organopolysiloxanmassen, wobei die Vernetzung durch Kondensation, Anlagerung von Si-gebundenem Wasserstoff an aliphatische Mehrfachbindung oder peroxidisch durch Bildung von Radikalen erfolgen kann.

Vorzugsweise handelt es sich bei den erfindungsgemäßen Massen um durch Anlagerung von Si-gebundenem Wasserstoff an aliphatische Kohlenstoff-Kohlenstoff-Mehrfachbindung vernetzbare Massen sowie um peroxidisch vernetzbare Organopolysiloxanmassen.

Art und Menge der üblicherweise in solchen Massen verwendeten Komponenten sind bereits bekannt. Hierzu sei beispielsweise auf die deutsche Anmeldung mit dem Aktenzeichen P44 01 606.9 (Wacker-Chemie GmbH; angemeldet am 20. Januar 1994) bzw. die entsprechende US-Anmeldung mit der Seriennummer USSN 08/368183, die deutsche Anmeldung mit dem Aktenzeichen P44 05 245.6 (Wacker-Chemie GmbH; angemeldet am 18.2.1994) und DE 43 36 345 A (Wacker-Chemie GmbH; ausgegeben am 27. April 1995) verwiesen.

Die erfindungsgemäßen peroxidisch vernetzbaren Organopolysiloxanmassen enthalten vorzugsweise

(A) Organopolysiloxane aus Einheiten der allgemeinen Formel

$$R^3_r SiO_{\frac{4-r}{2}}$$ (II),

worin

R$^3$ gleich oder verschieden sein kann und gegebenenfalls substituierter Kohlenwasserstoffrest bedeutet und

r 0, 1, 2 oder 3 ist und einen durchschnittlichen Zahlenwert von 1,9 bis 2,1 hat,

(B) verstärkende und/oder nichtverstärkende Füllstoffe,

(C) die Vernetzung bewirkendes Agens, wie beispielsweise organisches Peroxid,

(D) mindestens eine niedermolekulare aliphatisch ungesättigte Organosiliciumverbindung mit 2 bis 17 Siliciumatomen aus Einheiten der Formel (I)

sowie gegebenenfalls

(E) Additive.

Beispiele für Reste R$^3$ sind die für R und R$^1$ oben angegebenen Beispiele, wobei gegebenenfalls substituierte Kohlenwasserstoffreste mit 1 bis 8 Kohlenstoffatomen bevorzugt und der Methyl-, Vinyl-, Phenyl- und 3,3,3-Trifluorpropylrest besonders bevorzugt sind.

Vorzugsweise sind an mindestens 70 Mol% der in dem Organopolysiloxan aus Einheiten der Formel (II) enthaltenen Si-Atome Alkylreste, insbesondere Methylreste, gebunden. Enthalten die Organopolysiloxane (A) neben Si-gebundenen Methyl- und/oder 3,3,3-Trifluorpropylresten noch Si-gebundene Vinyl-und/oder Phenylreste, so handelt es sich bei letzteren bevorzugt um Mengen von 0,001 - 30 Mol%.

Vorzugsweise bestehen die Organopolysiloxane (A) überwiegend aus Diorganosiloxaneinheiten. Die Endgruppen der Organopolysiloxane (A) können Trialkylsiloxygruppen, insbesondere der Trimethylsiloxyrest oder der Dimethylvinylsiloxyrest, sein; es können aber auch ein oder mehrere dieser Alkylgruppen durch Hydroxygruppen oder Alkoxygruppen, wie Methoxy- oder Ethoxyreste, ersetzt sein.

Bei den Organopolysiloxanen (A) kann es sich um Flüssigkeiten oder hochviskose Substanzen handeln. Vorzugsweise weisen die Organopolysiloxane (A) bei 25°C eine Viskosität zwischen $10^3$ und $10^8$ mm$^2$/s auf.

Beispiele für verstärkende Füllstoffe sind pyrogene oder gefällte Kieselsäuren mit BET-Oberflächen von min-destens 50 m$^2$/g sowie Furnace-Ruß und Acetylen-Ruß.

Die genannten Kieselsäurefüllstoffe können hydrophilen Charakter haben oder nach bekannten Verfahren hydrophobiert sein. Hierzu sei beispielsweise auf DE 38 39 900 A (Wacker-Chemie GmbH; angemeldet am 25.11.1988) bzw. die entsprechende US-A 5,057,151 verwiesen. Im allgemeinen erfolgt dann die Hydrophobierung mit 1 bis 20 Gew.-% Hexamethyldisilazan und/oder Divinyltetramethyldisilazan und 0,5 bis 5 Gew.-% Wasser, jeweils bezogen auf das Gesamtgewicht der Organopolysiloxanmasse, wobei diese Reagenzien vorteilhafterweise in einer geeigneten Mischvorrichtung, wie z.B. Kneter oder Innenmischer, zum bereits vorgelegten Organopolysiloxan gegeben werden, bevor die hydrophile Kieselsäure sukzessive in die Masse eingearbeitet wird.

Beispiele für nichtverstärkende Füllstoffe sind Quarzmehl, Diatomeenerde, Calciumsilikat, Zirkoniumsilicat, Zeolithe, Metalloxidpulver, wie Aluminium-, Titan-, Eisen- oder Zinkoxid, Bariumsilikat, Bariumsulfat, Calciumcarbonat, Gips sowie Kunststoffpulver, wie Polyacrylnitrilpulver oder Polytetrafluorethylenpulver. Des weiteren können als Füllstoffe faserige Komponenten, wie Glasfasern und Kunststoffasern, eingesetzt werden. Die BET-Oberfläche dieser Füllstoffe liegt vorzugsweise unter 50 m$^2$/g.

Die erfindungsgemäßen, zu Elastomeren vernetzbaren Organopolysiloxanmassen enthalten Füllstoff (B) in Mengen von vorzugsweise 1 bis 200 Gewichtsteilen, besonders bevorzugt 30 bis 100 Gewichtsteilen, jeweils bezogen auf 100 Gewichtsteile Organopolysiloxan (A).

Bei der Komponente (C) kann es sich um allgemein ein die Vernetzung initiierendes oder bewirkendes Agens handeln, welches auch bisher in peroxidisch vernetzbaren Massen eingesetzt wurde.

Vorzugsweise werden als Komponente (C) bei den erfindungsgemäßen Organopolysiloxanmassen Peroxide, wie Dibenzoylperoxid, Bis-(2,4-dichlorbenzoyl)-peroxid, Dicumylperoxid und 2,5-Bis-(tert.-butylperoxy)-2,5-dimethylhexan sowie deren Gemische eingesetzt, wobei Bis-(2,4-dichlorbenzoyl)-peroxid und Dicumylperoxid bevorzugt sind.

Die erfindungsgemäßen zu Elastomeren vernetzbaren Organopolysiloxanmassen enthalten Peroxid (C) in Mengen von vorzugsweise 0,4 bis 2,0 Gewichtsprozent, besonders bevorzugt 0,7 bis 1,5 Gewichtsprozent, jeweils bezogen auf das Gesamtgewicht der Organopolysiloxanmasse.

Die erfindungsgemäßen zu Elastomeren vernetzbaren Organopolysiloxanmassen enthalten niedermolekulare Organosiliciumverbindung (D) in Mengen von vorzugsweise 0,01 bis 10,0 Gewichtsprozent, besonders bevorzugt 0,05 bis 2,0 Gewichtsprozent, jeweils bezogen auf das Gesamtgewicht der Organopolysiloxanmasse.

Der jeweiligen Anwendung entsprechend können den erfindungsgemäßen zu Elastomeren vulkanisierbaren Organopolysiloxanmassen Additive (E), wie beipielsweise Verarbeitungshilfsmittel, wie etwa Weichmacher, Pigmente und Stabilisatoren, wie etwa Hitzestabilisatoren, zugesetzt werden.

Beispiele für Weichmacher, die als Additive (E) eingesetzt werden können, sind mit Trimethylsilylgruppen oder Hydroxygruppen terminierte Polydimethylsiloxane mit einer Viskosität von maximal 1000 mm$^2$/s bei 25°C oder auch Diphenylsilandiol.

Beispiele für Hitzestabilisatoren, die als Additive (E) eingesetzt werden können, sind Übergangsmetallfettsäuresalze, wie Eisenoctoat, Übergangsmetallsilanolate, wie Eisensilanolat, sowie Cer(IV)-Verbindungen.

Darüberhinaus enthalten die erfindungsgemäßen Massen vorzugsweise keine weiteren Stoffe.

Bei den jeweiligen zur Herstellung der erfindungsgemäßen Massen eingesetzten Komponenten kann es sich jeweils um eine einzelne Art einer solchen Komponente, wie auch um ein Gemisch aus mindestens zwei verschiedenen Arten einer solchen Komponente handeln.

Die Herstellung der erfindungsgemäßen peroxidisch vernetzbaren Organopolysiloxanmassen kann nach bekannten Verfahren erfolgen, wie beispielsweise durch einfaches Mischen der einzelnen Komponenten. Die Einarbeitung der erfindungsgemäß eingesetzten niedermolekularen Organosiliciumverbindungen kann dabei auf verschiedenen Wegen des Zumischens erfolgen, z.B. in einem beliebigen Schritt des Mischens der einzelnen Komponenten der Silikonkautschukmasse. Vorteilhafterweise werden zur Bereitung der erfindungsgemäßen peroxidisch vernetzbaren Massen die niedermolekularen Oganosiliciumverbindungen während der Einarbeitung des Füllstoffes in die Masse eingemischt. Eine andere Möglichkeit ist das Aufbringen der erfindungsgemäß eingesetzten niedermolekularen Organosiliciumverbindung auf den Füllstoff durch Mischen in einem Pulvermischer oder durch Mischen in einer Suspension von Füllstoff, inertem organischen Lösungsmittel und niedermolekularer Organosiliciumverbindung und anschließendem Abziehen des organischen Lösungsmittels bis zur Trockene, um mit diesem anschließend, gleichermaßen mit dem Füllstoff als Träger, eingebracht zu werden. Eine weitere Möglichkeit besteht darin, daß die erfindungsgemäß eingesetzte niedermolekulare Organosiliciumverbindung durch chemische Reaktion, beispielsweise analog der oben beschriebenen Verfahrensvariante 2, auf dem Füllstoff erzeugt und auf diesem belassen wird.

Die erfindungsgemäßen peroxidisch vernetzbaren Massen können bei den gleichen Bedingungen vernetzen gelassen werden wie die bisher bekannten peroxidisch vernetzbaren Massen.

Die erfindungsgemäßen peroxidisch vernetzbaren Massen haben den Vorteil, daß die daraus hergestellten Elastomere sehr gute mechanische Eigenschaften, insbesondere in Bezug auf den Weiterreißwiderstand und Compression Set, zeigen.

Die erfindungsgemäßen Organopolysiloxanmassen sowie die erfindungsgemäß daraus hergestellten Elastomere können für alle Zwecke eingesetzt werden, für die auch bisher zu Elastomeren vernetzbare Organopolysiloxanmassen bzw. Elastomere verwendet wurden. Insbesondere eignen sich die erfindungsgemäßen Organopolysiloxanmassen sowie die erfindungsgemäß daraus hergestellten Elastomere für Anwendungen, die einen verbesserten Weiterreißwiderstand erfordern, wie z.B. Schläuche, Kabelummantelungen, Kraftfahrzeugteile und Dichtungen.

Die erfindungsgemäßen additionsvernetzbaren Organopolysiloxanmassen enthalten vorzugsweise

(1) Organopolysiloxane mit mindestens 18 Siliciumatomen, die Reste mit aliphatischen Kohlenstoff-Kohlenstoff-Mehrfachbindungen aufweisen,
(2) Organopolysiloxane mit Si-gebundenen Wasserstoffatomen,
(3) die Anlagerung von Si-gebundenem Wasserstoff an aliphatische Mehrfachbindung fördernder Katalysator,
(4) mindestens eine niedermolekulare aliphatisch ungesättigte Organosiliciumverbindung mit 2 bis 17 Siliciumatomen aus Einheiten der Formel (I) und
(5) verstärkende und/oder nicht verstärkende Füllstoffe sowie gegebenenfalls weitere Stoffe.

Handelt es sich bei der erfindungsgemäßen Masse um eine additionsvernetzende 2-Komponenten-Siliconkautschukmasse, so können die beiden Komponenten der erfindungsgemäßen Siliconkautschukmassen alle Bestandteile in beliebigen Kombinationen und Mengenverhältnissen enthalten, mit der Maßgabe, daß eine Komponente nicht gleichzeitig die Bestandteile (1), (2) und (3) enthält.

Bei den Organopolysiloxanen (1) handelt es sich vorzugsweise um lineare, cyclische oder verzweigte Siloxane mit mindestens 18 Siliciumatomen, aus Einheiten der Formel

$$R^4{}_s R^5{}_t SiO_{(4-s-t)/2} \tag{III},$$

wobei

R$^4$ gleich oder verschieden sein kann und eine für R$^1$ angegebene Bedeutung hat,

R$^5$ gleich oder verschieden sein kann und eine für R angegebene Bedeutung hat,

s 0, 1 oder 2 ist und

t 0, 1, 2 oder 3 ist, mit der Maßgabe, daß die Summe s+t kleiner oder gleich 3 beträgt und mindestens zwei Reste R$^4$ pro Molekül vorhanden sind.

Die Organopolysiloxane (1) besitzen vorzugsweise eine durchschnittliche Viskosität von $10^2$ bis $10^6$ mm$^2$/s bei 25°C.

Beispiele für Rest R$^4$ sind alle die für R$^1$ angegebenen Beispiele sowie sämtliche einer Hydrosilylierungsreaktion mit einer SiH-funktionellen Verbindung zugänglichen aliphatisch ungesättigten Reste.

Vorzugsweise handelt es sich bei Rest R$^4$ um Kohlenwasserstoffreste mit einer aliphatischen Mehrfachbindung mit 2 bis 6 Kohlenstoffatomen, wie Vinyl-, Allyl-, Methallyl-, 1-Propenyl-, 1-Butenyl-, 1-Pentenylrest, 5-Hexenyl-, Butadienyl-, Hexadienyl-, Cyclopentenyl-, Cyclopentadienyl-, Cyclohexenyl-, Ethinyl-, Propargyl- und 1-Propinylrest, wobei der Vinyl- und Allylrest besonders bevorzugt sind.

Beispiele für Reste R$^5$ sind alle die für Rest R angegebenen Beispiele.

Bei Rest R$^5$ handelt es sich vorzugsweise um gegebenenfalls substituierte aliphatisch gesättigte, monovalente Kohlenwasserstoffreste mit 1 bis 8 Kohlenstoffatomen, wobei der Methylrest besonders bevorzugt ist.

Besonders bevorzugt handelt es sich bei den Organopolysiloxanen (1) um lineare Organopolysiloxane mit einer Viskosität von 200 bis $10^5$ mm$^2$/s bei 25°C der Struktur

$$(ViMe_2SiO_{1/2})(ViMeSiO)_{0-50}(Me_2SiO)_{30-2000}(ViMe_2SiO_{1/2}),$$

wobei Me gleich Methyl- und Vi gleich Vinylrest bedeutet. Als Organopolysiloxane (2), die Si-gebundene Wasserstoffatome aufweisen, werden vorzugsweise lineare, cyclische oder verzweigte Siloxane aus Einheiten der Formel

$$R^5{}_u H_v SiO_{\frac{4-u-v}{2}} \tag{IV}$$

eingesetzt, wobei

R$^5$ gleich oder verschieden sein kann und die oben dafür angegebene Bedeutung hat,

u 0, 1, 2 oder 3 ist und

v 0, 1 oder 2 ist,

mit der Maßgabe, daß die Summe von u+v kleiner oder gleich 3 ist und durchschnittlich mindestens zwei Si-gebundene Wasserstoffatome je Molekül vorliegen.

Die Organopolysiloxane (2) besitzen vorzugsweise eine durchschnittliche Viskosität von 10 bis $2 \cdot 10^4$ mm$^2$/s bei 25°C.

Bevorzugt ist die Verwendung eines drei oder mehr SiH-Bindungen pro Molekül enthaltenden Polyorganosiloxans (2). Bei Verwendung eines nur zwei SiH-Bindungen pro Molekül aufweisenden Bestandteils (2) enthält das Alkenylgruppen enthaltende Polyorganosiloxan (1) vorzugsweise mindestens drei Alkenylgruppen pro Molekül.

Es wird also vorzugsweise das Polyorganosiloxan (2) als Vernetzer eingesetzt. Der Wasserstoffgehalt des Vernetzers, welcher sich ausschließlich auf die direkt an Siliciumatome gebundenen Wasserstoffatome bezieht, liegt bevorzugt im Bereich von 0,002 bis 1,7 Gew.-% Wasserstoff, besonders bevorzugt zwischen 0,1 und 1,7 Gew.-% Wasserstoff.

Besonders bevorzugt handelt es sich bei den Organopolysiloxanen (2) um Organopolysiloxane mit einer Viskosität von 20 bis 1000 mm$^2$/s bei 25°C.

Das Polyorganosiloxan (2) ist vorzugsweise in einer solchen Menge in der härtbaren Siliconkautschukmasse enthalten, daß das Molverhältnis von SiH-Gruppen zu Resten mit aliphatischer Kohlenstoff-Kohlenstoff-Mehrfachbindung der Komponente (1) zwischen 0,5 und 5, vorzugsweise zwischen 1,0 und 3,0, liegt.

Bestandteil (3) dient als Katalysator für die Additionsreaktion (Hydrosilylierung) zwischen den Resten mit aliphatischer Kohlenstoff-Kohlenstoff-Mehrfachbindung des Bestandteils (1) und den Si-gebundenen Wasserstoffatomen des Bestandteils (2). In der Literatur wurden bereits zahlreiche geeignete Hydrosilylierungskatalysatoren beschrieben. Prinzipiell können in den erfindungsgemäßen Massen alle üblicherweise in additionsvernetzenden Siliconkautschukmassen eingesetzten Hydrosilylierungskatalysatoren verwendet werden.

Als Hydrosilylierungskatalysator können Metalle, wie Platin, Rhodium, Palladium, Ruthenium und Iridium, vorzugsweise Platin, die gegebenenfalls auf feinteiligen Trägermaterialien, wie Aktivkohle, Aluminiumoxid oder Siliciumdioxid, fixiert sind, eingesetzt werden.

Vorzugsweise werden Platin und Platinverbindungen verwendet. Besonders bevorzugt werden solche Platinverbindungen, die in Polyorganosiloxanen löslich sind, eingesetzt. Als lösliche Platinverbindungen können beispielsweise die Platin-Olefin-Komplexe der Formeln $(PtCl_2 \cdot Olefin)_2$ und $H(PtCl_3 \cdot Olefin)$ verwendet werden, wobei bevorzugt Alkene mit 2 bis 8 Kohlenstoffatomen, wie Ethylen, Propylen, Isomere des Butens und Octens, oder Cycloalkene mit 5 bis 7 Kohlenstoffatomen, wie Cyclopenten, Cyclohexen und Cyclohepten, eingesetzt werden. Weitere lösliche Platin-Katalysatoren sind der Platin-Cyclopropan-Komplex der Formel $(PtCl_2 \cdot C_3H_6)_2$, die Umsetzungsprodukte von Hexachloroplatinsäure mit Alkoholen, Ethern und Aldehyden bzw. Mischungen derselben oder das Umsetzungsprodukt von Hexachloroplatinsäure mit Methylvinylcyclotetrasiloxan in Gegenwart von Natriumbicarbonat in ethanolischer Lösung. Besonders bevorzugt sind Komplexe des Platins mit Vinylsiloxanen, wie 1,3-Divinyltetramethyldisiloxan.

Der Hydrosilylierungskatalysator kann auch in mikroverkapselter Form eingesetzt werden, wobei der den Katalysator enthaltende und im Polyorganosiloxan unlösliche feinteilige Feststoff beispielsweise ein Thermoplast (Polyesterharze, Siliconharze) ist. Der Hydrosilylierungskatalysator kann auch in Form einer Einschlußverbindung, beispielsweise in einem Cyclodextrin, eingesetzt werden.

Die Menge des eingesetzten Hydrosilylierungskatalysators richtet sich nach der gewünschten Vernetzungsgeschwindigkeit sowie ökonomischen Gesichtspunkten und ist bekannt. Bei Verwendung gebräuchlicher Platin-Katalysatoren liegt der Gehalt der härtbaren Siliconkautschukmasse bezogen auf elementares Platin vorzugsweise im Bereich von 0,1 bis 500 Gew.-ppm, vorzugsweise zwischen 10 und 100 Gew.-ppm elementares Platin.

Die erfindungsgemäßen zu Elastomeren vernetzbaren Organopolysiloxanmassen enthalten niedermolekulare Organosiliciumverbindung (4) in Mengen von vorzugsweise 0,01 bis 10,0 Gewichtsprozent, besonders bevorzugt 0,05 bis 2,0 Gewichtsprozent, jeweils bezogen auf das Gesamtgewicht der Organopolysiloxanmasse.

Beispiele für eingesetzte Füllstoffe (5) sind verstärkende Füllstoffe, also Füllstoffe mit einer spezifischen Oberfläche nach BET von mindestens 50 m$^2$/g, vorzugsweise 50 - 500 m$^2$/g, wie pyrogen erzeugte Kieselsäure, unter Erhalt der Struktur entwässerte Kieselsäurehydrogele, also sogenannte "Aerogele", und andere Arten von gefälltem Siliciumdioxid; und nicht verstärkende Füllstoffe, also Füllstoffe mit einer spezifischen Oberfläche nach BET von weniger als 50 m$^2$/g, wie Quarzmehl, Diatomeenerde, Calciumsilikat, Zirkoniumsilikat, Zeolithe, Tone, Lithopone, Metalloxide, wie Eisenoxid, Zinkoxid, Titandioxid und Aluminiumoxid, Metallcarbonate, wie Calciumcarbonat, Magnesiumcarbonat und Zinkcarbonat, Metallsulfate, wie Bariumsulfat, Metallstäube, Fasern, Ruß, Graphit, Glimmer und Kreide. Die genannten Füllstoffe können, wie oben beschrieben, hydrophobiert sein.

Die erfindungsgemäßen, zu Elastomeren vernetzbaren Organopolysiloxanmassen enthalten Füllstoff in Mengen von vorzugsweise 1 bis 50 Gewichtsteilen, besonders bevorzugt 5 bis 40 Gewichtsteilen, jeweils bezogen auf 100 Gewichtsteile der erfindungsgemäßen vernetzbaren Organopolysiloxanmasse.

Während die Bestandteile (1) bis (5) notwendige Bestandteile der erfindungsgemäßen Siliconkautschukmasse sind, können wahlweise weitere Zusätze zu einem Anteil von bis zu 50 Gew.-%, vorzugsweise zwischen 1 und 40 Gew.-%, in der Siliconkautschukmasse enthalten sein. Diese Zusätze können z.B. Haftvermittler, wie z.B. Aminoalkoxysilane und lineare wie auch harzartige Methylsiloxane mit Si-gebundenem Wasserstoff, Hitzestabilisatoren, wie z. B. Übergangsmetallfettsäuresalze, wie Eisenoctoat, Übergangsmetallsilanolate, wie Eisensilanolat, Cer(IV)-Verbindungen, übergangsmetallhaltige Kieselsäuren oder Palladiumverbindungen, Inhibitoren, Pigmente, Farbstoffe und Weichmacher sein.

Beispiele für Weichmacher sind bei Raumtemperatur flüssige, durch Triorganosiloxygruppen endblockierte Diorganopolysiloxane, wie durch Trimethylsiloxygruppen endblockierte Dimethylpolysiloxane mit einer Viskosität von 10 bis 10 000 mm$^2$/s bei 25°C sowie bei Raumtemperatur flüssige Organosiloxanharze.

Enthalten sein können insbesondere Zusätze, die der gezielten Einstellung der Verarbeitungszeit und Vernetzungsgeschwindigkeit der härtbaren Siliconkautschukmasse dienen. Diese an sich bekannten Inhibitoren sind beispielsweise acetylenische Alkohole, wie Ethinylcyclohexanol und 2-Methyl-3-butin-2-ol, Trialkylcyanurate, Alkylmaleate, wie Diallylmaleat und Dimethylmaleat, Alkylfumarate, wie Diethylfumarat und Diallylfumarat, organische Hydroperoxide, wie Cumolhydroperoxid, tert.-Butylhydroperoxid und Pinanhydroperoxid, organische Peroxide, Benzotriazol, organische Sulfoxide, organische Amine und Amide, Phosphine, Phosphite, Nitrile, Diaziridine und Oxime.

Darüberhinaus enthalten die erfindungsgemäßen Massen vorzugsweise keine weiteren Stoffe.

Bei den jeweiligen zur Herstellung der erfindungsgemäßen Massen eingesetzten Komponenten kann es sich jeweils um eine einzelne Art einer solchen Komponente, wie auch um ein Gemisch aus mindestens zwei verschiedenen Arten einer solchen Komponente handeln.

Die Herstellung der erfindungsgemäßen durch Addition von Si-gebundenem Wasserstoff an aliphatische Kohlenstoff-Kohlenstoff-Mehrfachbindung vernetzbaren Organopolysiloxanmassen kann nach bekannten Verfahren erfolgen, wie beispielsweise durch einfaches Mischen der einzelnen Komponenten. Hierzu soll noch auf die bereits eingangs zitierte Deutsche Anmeldung mit dem Aktenzeichen P4405245.6 verwiesen werden.

Die Einarbeitung der erfindungsgemäß eingesetzten niedermolekularen Organosiliciumverbindungen kann dabei auf verschiedenen Wegen des Zumischens erfolgen, z.B. in einem beliebigen Schritt des Mischens der einzelnen Komponenten der Silikonkautschukmasse. Vorteilhafterweise werden zur Bereitung der erfindungsgemäßen additionsvernetzbaren Massen die niedermolekularen Organosiliciumverbindungen während der Einarbeitung des Füllstoffes in die Masse eingemischt. Eine andere Möglichkeit ist das Aufbringen der niedermolekularen Organosiliciumverbindung auf den Füllstoff durch Mischen in einem Pulvermischer oder durch Mischen in einer Suspension von Füllstoff, inertem organischen Lösungsmittel und erfindungsgemäß eingesetzter niedermolekularer Organosiliciumverbindung und anschließendem Abziehen des organischen Lösungsmittels bis zur Trockene, um mit diesem anschließend, gleichermaßen mit dem Füllstoff als Träger, eingebracht zu werden. Eine weitere Möglichkeit besteht darin, daß die erfindungsgemäß eingesetzte niedermolekulare Organosiliciumverbindung durch chemische Reaktion, beispielsweise analog der oben beschriebenen Verfahrensvariante 2, auf dem Füllstoff erzeugt und auf diesem belassen wird.

Bei der Bereitung der erfindungsgemäßen Massen in zwei Komponenten wird vorzugsweise die erfindungsgemäß eingesetzte niedermolekulare Organosiliciumverbindung im letzten Mischschritt zugegeben.

Die erfindungsgemäßen durch Addition vernetzbaren Massen können bei den gleichen Bedingungen vernetzen gelassen werden wie die bisher bekannten durch Addition vernetzbaren Massen. Vorzugsweise wird die Vulkanisation bei einer Temperatur von 10 bis 200°C durchgeführt.

Die erfindungsgemäßen durch Addition vernetzbaren Massen haben den Vorteil, daß sie sehr gute rheologische Eigenschaften, insbesondere eine ausgezeichnete Viskositätsstabilität, aufweisen.

Des weiteren haben die erfindungsgemäßen durch Addition vernetzbaren Massen den Vorteil, daß die daraus hergestellten Elastomere sehr gute mechanische Eigenschaften, insbesondere in Bezug auf den Weiterreißwiderstand und Compression Set, zeigen.

Die erfindungsgemäßen Organopolysiloxanmassen sowie die erfindungsgemäß daraus hergestellten Elastomere können für alle Zwecke eingesetzt werden, für die auch bisher zu Elastomeren vernetzbare Organopolysiloxanmassen bzw. Elastomere verwendet wurden. Insbesondere eignen sich die erfindungsgemäßen Organopolysiloxanmassen sowie die erfindungsgemäß daraus hergestellten Elastomere für Formartikel nach dem Spritzgußverfahren, Abformanwendungen, die einen verbesserten Weiterreißwiderstand erfordern, wie z.B. Babysauger, Flaschensauger, Dichtungen und Spezialformen.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt. Des weiteren beziehen sich alle Angaben von Teilen und Prozentsätzen, soweit nichts anderes angegeben ist, auf das Gewicht.

Der Weiterreißwiderstand der Vulkanisate wird nach ASTM D 624-B-91 bestimmt.

Der Compression Set wird nach DIN 53517 bestimmt.

Des weiteren werden die folgenden Abkürzungen verwendet:

Me:    Methylrest
Et:    Ethylrest
Vi:    Vinylrest

Beispiel 1

Herstellung von $(Me_2ViSiO)_2Si(Me_3SiO)_2$
Kurzbezeichnung: $(VM)_2QM_2$

Eine Mischung aus 2007,2 g (10,8 Mol) 1,3-Divinyltetramethyldisiloxan, 614,8 g (3,62 Mol) $SiCl_4$, 2,7 g (1000 ppm) Tetramethylharnstoff und 231 $PNCl_2$ (25%ig in Trichloropropan) (=2,2 % $PNCl_2$) wird 5 Stunden bei Raumtemperatur gerührt (zu Beginn Exothermie auf 62°C). Nach Abziehen der flüchtigen Bestandteile bei 120°C im Ölpumpenvakuum am Rotationsverdampfer wird der Rückstand destilliert. Es werden 180 g reines $(Me_2ViSiO)_2SiCl_2$ als farblose, klare Flüssigkeit mit einem Siedepunkt von 47°C bei 100 hPa erhalten. Die Identifikation erfolgt über das $^1$H- und $^{29}$Si-NMR-Spektrum. Die Ausbeute beträgt 16,6%.

50,0 g (0,166 Mol) des so erhaltenen $(Me_2ViSiO)_2SiCl_2$ werden nun mit 41,9 g (0,415 Mol) Triethylamin und 150 g n-Hexan vermischt und bei Raumtemperatur mit 42,0 g (0,38 Mol) Tri-methylsilanol (technisch, getrocknet über Molsieb 0,4 nm; enthält laut $^1$H-NMR 19 % Hexamethyldisiloxan) binnen 30 Minuten versetzt. Man läßt eine Stunde nachreagieren, wäscht mit Wasser und trocknet die organische Phase über Natriumsulfat. Nach Abziehen der flüchtigen Bestandteile bei 25°C im Ölpumpenvakuum am Rotationsverdampfer wird der Rückstand über eine Vigreux-Kolonne fraktioniert. Es werden 25 g reines $(Me_2ViSiO)_2Si(Me_3SiO)_2$ als farblose, klare Flüssigkeit mit einem Siedepunkt von 58-62°C bei 300 hPa erhalten. Die Identifikation erfolgt über das $^1$H-NMR-Spektrum. Die Ausbeute beträgt 37%.

**Beispiel 2**

Herstellung von $(Me_2ViSiO)_3Si-OH$
Kurzbezeichnung: $(VM)_3Q-OH$
Eine Mischung aus 1834 g (9,86 Mol) 1,3-Divinyltetramethyldisiloxan, 559 g (3,29 Mol) $SiCl_4$, 2,4 g (25 ppm) Tetramethylharnstoff (2,5 %ig in n-Hexan) und 24 g $PNCl_2$ (25%ig in Trichlorpropan) (=0,25 % $PNCl_2$) werden 46 Stunden bei Raumtemperatur gerührt. Nach Abziehen der flüchtigen Bestandteile bei 30°C/400 hPa am Rotationsverdampfer wird der Rückstand destilliert. Es werden 334 g einer farblosen, klaren Flüssigkeit mit einem Siedepunkt von 93-100°C bei 600 hPa erhalten. Die Zusammensetzung des erhaltenen Produktes wird über das $^{29}$Si-NMR-Spektrum bestimmt:

94 Mol-% $(Me_2ViSiO)_3SiCl$ und
6 Mol-% $(Me_2ViSiO)_4Si$

Die Ausbeute beträgt 26%.
348 g (0,95 Mol) der so erhaltenen Mischung aus 94 Mol-% $(Me_2ViSiO)_3SiCl$ und 6 Mol-% $(Me_2ViSiO)_4Si$ werden nun mit 105,7 g (1,05 Mol) Triethylamin und 1670 g n-Hexan vermischt und bei Raumtemperatur mit 84,9 g (4,7 Mol) Wasser versetzt. Man läßt 18 Stunden bei Raumtemperatur rühren, erhitzt anschließend eine Stunde zum Rückfluß, wäscht mit Wasser und trocknet die organische Phase über Natriumsulfat. Nach Abziehen der flüchtigen Bestandteile bei 30°C/700hPa am Rotationsverdampfer wird der Rückstand über eine Füllkörper-Kolonne destilliert. Es werden 267 g einer farblosen, klaren Flüssigkeit mit einem Siedepunkt von 73-75°C bei 500 hPa erhalten. Die Zusammensetzung des erhaltenen Produktes wird über das $^{29}$Si- NMR-Spektrum bestimmt:

96 Mol-% $(Me_2ViSiO)_3SiOH$ und
4 Mol-% $(Me_2ViSiO)_4Si$

**Beispiel 3**

Herstellung von $(Me_2ViSiO)_3Si(Me_3SiO)$
Kurzbezeichnung: $(VM)_3QM$
Zu einer Mischung aus 23,8 g (0,21 Mol) Trimethylchlorsilan, 26,3 g (0,26 Mol) Triethylamin und 150 g n-Hexan werden bei Raumtemperatur 45,0 g (0,174 Mol) des in Beispiel 2 erhaltenen $(Me_2ViSiO)_3SiOH$ (96%ig) binnen 40 Minuten zugetropft. Man läßt eine Stunde nachreagieren, wäscht mit Wasser und trocknet die organische Phase über Natriumsulfat. Nach Abziehen der flüchtigen Bestandteile bei 25°C im Ölpumpenvakuum am Rotationsverdampfer wird der Rückstand über eine Vigreux-Kolonne fraktioniert. Es werden 15 g reines $(Me_2ViSiO)_3Si(Me_3SiO)$ als farblose, klare Flüssigkeit mit einem Siedepunkt von 60-63°C bei 400 hPa erhalten. Die Identifikation erfolgt über das $^1$H-NMR-Spektrum. Die Ausbeute beträgt 28%.

**Beispiel 4**

Herstellung von $(Me_2ViSiO)_2(Me_3SiO)SiOH$
Kurzbezeichnung: $(VM)_2MQ-OH$
Zu einer Mischung aus 58,5 g (0,19 Mol) $(Me_2ViSiO)_2SiCl_2$, dessen Herstellung oben in Beispiel 1 beschrieben ist, 20,8 g (0,2 Mol) Triethylamin und 292 g Tetrahydrofuran wird bei Raumtemperatur eine Lösung von 19 g (0,19 Mol) Trimethylsilanol (technisch, getrocknet über Molsieb 0,4 nm; enthält laut $^1$H-NMR 10 % Hexamethyldisiloxan) binnen 2,25 Stunden zugetropft. Man läßt zwei Stunden nachreagieren, filtriert über Filterhilfe (käuflich erhältlich unter der Bezeichnung "Seitz Super" bei Seitz Filterwerke, D-Bad Kreuznach) und destilliert bei 30°C und 700 hPa das Lösungsmittel ab. Nach erneuter Filtration wird über eine Brücke destilliert. Im Siedebereich von 55-81°C bei 500 hPa werden 41,5 g einer farblosen, klaren Flüssigkeit erhalten, die laut $^{29}$Si-NMRSpektrum 83 Mol-% $(Me_2ViSiO)_2(Me_3SiO)SiCl$ enthält. Die Ausbeute beträgt 51%.
Zu einer Mischung von 29 g (1,6 Mol) Wasser, 31,9 g (0,32 Mol) Triethylamin und 203 g Diethylether wird bei Raumtemperatur eine Lösung von 58,0 g (0,11 Mol) des so erhaltenen $(Me_2ViSiO)_2(Me_3SiO)SiCl$ in 60 g Diethylether binnen 60 Minuten zugetropft, wobei die Temperatur der Reaktionsmischung auf 30°C ansteigt. Man läßt zwei Stunden nachreagieren, wäscht mit Wasser und trocknet die organische Phase über Natriumsulfat. Nach Abziehen der flüchtigen Bestandteile bei 25-60°C im Ölpumpenvakuum am Rotationsverdampfer werden 47 g eines klaren Öls als Rückstand erhalten. Laut $^1$H- und $^{29}$Si-NMR-Spektrum zeigt das öl einen Gehalt an $(Me_2ViSiO)_2(Me_3SiO)SiOH$ von ca. 80%. Restmengen an Triethylamin werden durch Filtration über säureaktivierte Bleicherde (käuflich erhältlich unter der Bezeichnung "Tonsil Optimum FF" bei der Südchemie AG, München) entfernt. Es werden 33 g $(Me_2ViSiO)_2$ $(Me_3SiO)SiOH$ erhalten; die Ausbeute beträgt ca. 90%.

**Beispiel 5**

Herstellung von $(Me_2ViSiO)_4Si$
Kurzbezeichnung: $(VM)_4Q$
Eine Mischung aus 248 g $SiCl_4$ und 1540 g Vinyldimethylchlorsilan wird langsam mit 848 g Ethanol versetzt, anschließend langsam mit 360 g Wasser hydrolysiert. Nach weiterer Zugabe von 400 g Wasser wird 90 Minuten gerührt. Die wässrige Phase wird abgetrennt und die organische Phase wird dreimal mit Wasser gewaschen. Anschließend wird die organische Phase bis 130°C und einem Druck von 70 hPa ausdestilliert. Es werden 570 g einer klaren Flüssigkeit erhalten, die gemäß Gaschromatogramm 95 % $(ViMe_2SiO)_4Si$ enthält.

**Beispiel 6**

Herstellung von $(Me_2ViSiO)_2Si(Me_3SiO)_2$-60%
Kurzbezeichnung: $(VM)_2QM_2$-60%
Eine Mischung aus 248 g $SiCl_4$, 770 g Vinyldimethylchlorsilan und 694 g Trimethylchlorsilan wird langsam mit 848 g Ethanol versetzt, anschließend langsam mit 360 g Wasser hydrolysiert. Nach weiterer Zugabe von 400 g Wasser wird 90 Minuten gerührt. Die wässrige Phase wird abgetrennt und die organische Phase wird dreimal mit Wasser gewaschen. Anschließend wird die organische Phase bis 130°C bei einem Druck von 300 hPa ausdestilliert. Es werden 525 g eines flüssigen Rückstandes erhalten, der gemäß Gaschromatogramm 5 % $(Me_3SiO)_4Si$, 18 % $(Me_2ViSiO)Si(Me_3SiO)_3$, 60 % $(Me_2ViSiO)_2Si(Me_3SiO)_2$, 14 % $(Me_2ViSiO)_3Si(Me_3SiO)$ $(Me_3SiO)$ und 3 % $(ViMe_2SiO)_4Si$ aufweist.

**Beispiel 7**

Herstellung von $(Me_2ViSiO)_2Si(Me_3SiO)_2$-55%
Kurzbezeichnung: $(VM)_2QM_2$-55%
Eine Mischung aus 248 g $SiCl_4$ und 1388 g Trimethylchlorsilan wird langsam mit 848 g Ethanol versetzt, anschließend langsam mit 360 g Wasser hydrolysiert. Nach weiterer Zugabe von 400 g Wasser wird 90 Minuten gerührt. Die wässrige Phase wird abgetrennt und die organische Phase wird dreimal mit Wasser gewaschen. Anschließend wird die organische Phase bis 130°C und einem Druck von 70 hPa ausdestilliert. 200 g der so erhaltenen Flüssigkeit werden in 212 g 1,3-Divinyl-tetramethyldisiloxan gelöst und die Lösung über einen Zeitraum von 6 Stunden bei 80°C unter Zugabe von 30 g säureaktivierter Bleicherde (käuflich erhältlich unter der Bezeichnung "Tonsil Optimum FF" bei der Südchemie AG, München) behandelt. Nach Abfiltrieren des Katalysators wird die Lösung bei 130°C und bei einem Druck von 300 hPa ausdestilliert. Es werden 208 g eines flüssigen Rückstandes erhalten, der gemäß Gaschromatogramm 5 % $(Me_3SiO)_4Si$, 20% $(Me_2ViSiO)Si(Me_3SiO)_3$, 55 % $(Me_2ViSiO)_2Si(Me_3SiO)_2$, 16 % $(Me_2ViSiO)_3Si(Me_3SiO)$ $(Me_3SiO)$ und 4 % $(ViMe_2SiO)_4Si$ aufweist.

**Beispiel 8**

Herstellung eines niedermolekularen Siloxans der Zusammensetzung $[Me_2ViSiO]_4 [Me_3SiO]_4 (SiO_{4/2})_3$
Kurzbezeichnung: $[(VM)_{1,3}M_{1,3}Q]$
Eine Mischung aus 248 g $SiCl_4$, 250 g Vinyldimethylchlorsilan und 225 g Trimethylchlorsilan wird langsam mit 848 g Ethanol versetzt, anschließend langsam mit 360 g Wasser hydrolysiert. Nach weiterer Zugabe von 400 g Wasser wird 90 Minuten gerührt. Die wässrige Phase wird abgetrennt und die organische Phase wird dreimal mit Wasser gewaschen. Anschließend wird die organische Phase bis 130°C bei einem Druck von 70 hPa ausdestilliert. Es werden 462 g eines flüssigen Rückstandes mit einer Viskosität von 14 mm$^2$/s erhalten, der gemäß $^{29}$Si-NMR-Spektrum ein molares Verhältnis von Vinyldimethylsiloxy-Einheiten zu $SiO_{4/2}$-Einheiten von 1,30 zu 1 und von Trimethylsiloxy-Einheiten zu $SiO_{4/2}$-Einheiten von 1,32 zu 1 aufweist.

### Beispiel 9

Herstellung eines niedermolekularen Siloxans der Zusammensetzung $[Me_2ViSiO]_4$ $[Me_3SiO]_4$ $[SiO_{4/2}]_3$ Kurzbezeichnung: $[(VM)_{1,3}M_{1,3}Q]$

Eine Mischung aus 248 g $SiCl_4$ und 500 g Trimethylchlorsilan wird langsam mit 848 g Ethanol versetzt, anschließend langsam mit 360 g Wasser hydrolysiert. Nach weiterer Zugabe von 400 g Wasser wird 90 Minuten gerührt. Die wässrige Phase wird abgetrennt und die organische Phase wird dreimal mit Wasser gewaschen. Anschließend wird die organische Phase bis 130°C und einem Druck von 70 hPa ausdestilliert. 300 g der so erhaltenen Flüssigkeit werden in 212 g Hexamethyldisiloxan gelöst und die Lösung über einen Zeitraum von 6 Stunden bei 80°C unter Zugabe von 30 g säureaktivierter Bleicherde (käuflich erhältlich unter der Bezeichnung "Tonsil Optimum FF" bei der Südchemie AG, München) behandelt. Nach Abfiltrieren des Katalysators wird die Lösung bei 130°C und bei einem Druck von 300 hPa ausdestilliert. Es werden 317 g eines flüssigen Rückstandes mit einer Viskosität von 13,5 $mm^2$/s erhalten, der gemäß $^{29}Si$-NMR-Spektrum ein molares Verhältnis von Vinyldimethylsiloxy-Einheiten zu $SiO_{4/2}$-Einheiten von 1,31 zu 1 und von Trimethylsiloxy-Einheiten zu $SiO_{4/2}$-Einheiten von 1,29 zu 1 aufweist.

### Beispiel 10

Herstellung von $(ViMe_2SiO)_3SiOH$ Kurzbezeichnung: $(VM)_3QOH$

50 g Wasser und 50 g 1,3-Divinyl-1,1,3,3-tetramethyldisilazan werden intensiv mit 100 g einer pyrogenen Kieselsäure mit einer spezifischen Oberfläche nach BET von 300 $m^2$/g (käuflich erhältlich unter der Bezeichnung "WAKKER HDK® T30" bei der Wacker-Chemie GmbH) vermischt, für eine Stunde bei Raumtemperatur gerührt und anschließend für 24 Stunden bei 80°C gelagert. Das pulvrige Reaktionsgemisch wird anschließend bei 140°C während zwei Stunden in einem schwachen Stickstoffstrom von leichtflüchtigen Verbindungen gereinigt. Durch destillatives Austreiben in trockenem Stickstoff bei 200°C während 8 Stunden werden, nach Abtrennen eines geringen Anteils einer wässrigen Phase, 16,8 g einer klaren Flüssigkeit erhalten, die gemäß Gaschromatographie 82 % $(VM)_3QOH$ enthält.

### Beispiel 11

Herstellung von $(ViMe_2SiO)_3SiOH$ Kurzbezeichnung: $(VM)_3QOH$

Die in Beispiel 10 beschriebene Verfahrensweise wird wiederholt mit der Abänderung, daß das Verfahren nach dem Reinigen in einem schwachen Stickstoffstrom von leichtflüchtigen Verbindungen abgebrochen und kein weiteres destillatives Austreiben in trockenem Stickstoff vorgenommen wird. Es wird ein weißes Pulver erhalten mit einem Gehalt an flüchtigen Verbindungen (bestimmt als den Gewichtsverlust nach 2 Stunden Ausheizen unter leichtem Stickstoffstrom bei 230°C) von 13,7 %. Diese flüchtigen Verbindungen enthalten gemäß Gaschromatographie neben 13 % Wasser 71 % $(VM)_3QOH$.

### Beispiel 12

Herstellung von $(ViMe_2SiO)_3SiOH$ Kurzbezeichnung: $(VM)_3QOH$

50 g Wasser, 50 g 1,3-Divinyl-1,1,3,3-tetramethyldisilazan und 100 g einer pyrogenen Kieselsäure mit einer spezifischen Oberfläche nach BET von 300 $m^2$/g (käuflich erhältlich unter der Bezeichnung "WACKER HDK® T30" bei der Wacker-Chemie GmbH) werden in 500 g Hexamethyldisiloxan suspendiert und anschließend für 24 Stunden bei 80°C umgesetzt. Anschließend wird bei Normaldruck bis 110°C überschüssiges Hexamethyldisiloxan abdestilliert. Das so erhaltene pulvrige Reaktionsgemisch wird anschließend bei 140°C während zwei Stunden in einem schwachen Stickstoffstrom von leichtflüchtigen Verbindungen gereinigt. Durch destillatives Austreiben in trockenem Stickstoff bei 200°C während 8 Stunden werden, nach Abtrennen eines geringen Anteils einer wässrigen Phase, 14,7 g einer klaren Flüssigkeit erhalten, die gemäß Gaschromatographie 80 % $(VM)_3QOH$ enthält.

### Beispiel 13

Herstellung von $(ViMe_2SiO)_3SiOH$ Kurzbezeichnung: $(VM)_3QOH$

Die in Beispiel 12 beschriebene Verfahrensweise wird wiederholt mit der Abänderung, daß das Verfahren nach dem Reinigen in einem schwachen Stickstoffstrom von leichtflüchtigen Verbindungen abgebrochen und kein weiteres destillatives Austreiben in trockenem Stickstoff vorgenommen wird. Es wird ein weißes Pulver erhalten mit einem Gehalt an flüchtigen Verbindungen (bestimmt als den Gewichtsverlust nach 2 Stunden Ausheizen unter leichtem Stickstoffstrom bei 230°C) von 13,9 %. Diese flüchtigen Verbindungen enthalten gemäß Gaschromatographie neben 11 % Wasser 68 % $(VM)_3QOH$.

**Beispiel 14**

Herstellung von $(ViMe_2SiO)_3SiMe$
Kurzbezeichnung: $(VM)_3T(Me)$
Die in Beispiel 5 beschriebene Arbeitsweise wird wiederholt mit der Abänderung, daß anstelle von 248 g $SiCl_4$ 218 g Methyltrichlorsilan eingesetzt werden. Es werden 460 g einer farblosen Flüssigkeit erhalten, die gemäß Gaschromatographie 91 % $(ViMe_2SiO)_3SiMe$ enthält.

**Beispiel 15**

Herstellung von $(ViMe_2SiO)_3SiVi$
Kurzbezeichnung: $(VM)_3T(Vi)$
Die in Beispiel 5 beschriebene Arbeitsweise wird wiederholt mit der Abänderung, daß anstelle von 248 g $SiCl_4$ 236 g Vinyltrichlorsilan eingesetzt werden. Es werden 435 g einer farblosen Flüssigkeit erhalten, die gemäß Gaschromatographie 92 % $(ViMe_2SiO)_3SiVi$ enthält.

**Beispiel 16**

Herstellung einer Grundmasse für additionsvernetzende Massen
In einem 5 1 Laborkneter werden 500 g eines mit Vinylgruppen terminierten Dimethylpolysiloxans mit einer Viskosität von 20000 $mm^2$/s vorgelegt, auf 150°C aufgeheizt und mit 390 g einer mit Hexamethyldisilazan gemäß der bereits eingangs genannten DE 38 39 900 A hydrophobierten Kieselsäure als Füllstoff versetzt. Durch Kneten bei 1000 hPa bei 150°C werden während einer Stunde flüchtige Bestandteile entfernt. Es entsteht eine sehr steife Masse, die anschließend mit 410 g des oben genannten Dimethylpolysiloxans verdünnt wird. Aus dieser Grundmasse werden anschließend in einem Planetenmischer eine A- sowie eine B-Komponente hergestellt.
Zur Herstellung der A-Komponente werden nun innerhalb von 30 Minuten bei Raumtemperatur und Normaldruck 380 g der oben beschriebenen Grundmasse, 0,2 g Pt-Komplex mit Divinyltetramethyldisiloxan, 0,6 g der in Tabelle 1 angegebenen niedermolekularen Organosiliciumverbindungen, deren Herstellung in den vorangehenden Beispielen beschrieben ist, sowie 1,0 g Ethinylcyclohexanol als Inhibitor vermischt.
Zur Herstellung der B-Komponente werden dann innerhalb von 30 Minuten bei Raumtemperatur und Normaldruck 380 g der oben beschriebenen Grundmasse, 18 g lineares Methyl-H-Polysiloxan mit 0,5 Mol-% Si-H und einer Viskosität von 400 $mm^2$/s als Vernetzer, 1,0 g Ethinylcyclohexanol als Inhibitor und 0,6 g der in Tabelle 1 angegebenen niedermolekularen Organosiliciumverbindungen, deren Herstellung in den vorangehenden Beispielen beschrieben ist, vermischt.
Die Komponenten A und B werden jeweils in einem Gewichtsverhältnis von 1:1 vermischt und bei einer Temperatur von 160 °C vernetzen gelassen.
Nach der Vulkanisation und 4 Stunden Tempern bei 200°C werden der Weiterreißwiderstand und der Compression Set bestimmt. Die Ergebnisse finden sich in Tabelle 1.

Tabelle 1

| niedermolekulare Organosiliciumverbindung gemäß Beispiel | Kurzbezeichnung | Weiterreißwiderstand in N/mm | Compression Set in % |
|---|---|---|---|
| 1 | $(VM)_2M_2Q$ | 37 | 17 |
| 2 | $(VM)_3QOH$ | 40 | 15 |
| 3 | $(VM)_3MQ$ | 39 | 15 |
| 4 | $(VM)_2MQOH$ | 38 | 18 |
| 5 | $(VM)_4Q$ | 44 | 11 |
| 6 | $(VM)_2M_2Q$-60 | 37 | 20 |
| 7 | $(VM)_2M_2Q$-55 | 37 | 20 |
| 8 | $(VM)_{1,3}M_{1,3}Q$ | 36 | 23 |
| 9 | $(VM)_{1,3}M_{1,3}Q$ | 36 | 23 |

Tabelle 1   (fortgesetzt)

| niedermolekulare Organosiliciumverbindung gemäß Beispiel | Kurzbezeichnung | Weiterreißwiderstand in N/mm | Compression Set in % |
|---|---|---|---|
| 10 | $(VM)_3QOH$ | 39 | 15 |
| 12 | $(VM)_3QOH$ | 39 | 15 |
| 14 | $(VM)_3T(Me)$ | 40 | 14 |
| 15 | $(VM)_3T(Vi)$ | 43 | 13 |
| V 1 | - | 31 | 33 |

**Beispiel 17**

Die in Beispiel 16 beschriebene Verfahrensweise zur Herstellung der Grundmasse wird wiederholt mit der Abänderung, daß als Füllstoff anstelle von 390 g hydrophobierter Kieselsäure 385 g eingesetzt werden.

Zur Herstellung der A-Komponente werden nun innerhalb von 30 Minuten bei Raumtemperatur und Normaldruck 380 g der oben beschriebenen Grundmasse, 0,2 g Platinkomplex mit Divinyltetramethyldisiloxan, 0,6 g des in Tabelle 2 angegebenen pulvrigen Produktes, beinhaltend die niedermolekularen Organosiliciumverbindungen, dessen Herstellung in den genannten Beispielen beschrieben ist, und 1,0 g Ethinylcyclohexanol als Inhibitor vermischt.

Zur Herstellung der B-Komponente werden dann innerhalb von 30 Minuten bei Raumtemperatur und Normaldruck 380 g der oben beschriebenen Grundmasse, 18 g lineares Methyl-H-Polysiloxan mit 0,5 Mol-% Si-H und einer Viskosität von 400 mm²/s als Vernetzer, 1,0 g Ethinylcyclohexanol als Inhibitor und 5 g des in Tabelle 2 angegebenen pulvrigen Produktes, beinhaltend die niedermolekularen Organosiliciumverbindungen, dessen Herstellung in den vorangehenden Beispielen beschrieben ist, vermischt.

Des weiteren wird wie in Beispiel 16 beschrieben verfahren. Nach der Vulkanisation und 4 Stunden Tempern bei 200°C werden der Weiterreißwiderstand und der Compression Set bestimmt. Die Ergebnisse finden sich in Tabelle 2.

Tabelle 2

| niedermolekulare Organosiliciumverbindung gemäß Beispiel | Kurzbezeichnung | Weiterreißwiderstand in N/mm | Compression Set in % |
|---|---|---|---|
| 11 | $(VM)_3QOH$ | 39 | 16 |
| 13 | $(VM)_3QOH$ | 38 | 15 |

**Vergleichsbeispiel 1**

Die in Beispiel 16 beschriebene Arbeitsweise wird wiederholt mit der Abänderung, daß zur Herstellung der A- wie auch der B-Komponente jeweils keine niedermolekulare Organosiliciumverbindung eingesetzt wird. Die Ergebnisse finden sich in Tabelle 1.

**Patentansprüche**

1.   Niedermolekulare Organosiliciumverbindungen mit 2 bis 17 Siliciumatomen aus Einheiten der Formel

$$R_aR^1{}_b(OR^2)_cSiO_{4-(a+b+c)/2} \tag{I},$$

wobei

R   gleich oder verschieden sein kann und Wasserstoffatom oder gegebenenfalls substituierter, SiC-gebundener aliphatisch gesättigter Kohlenwasserstoffrest mit 1 bis 18 Kohlenstoffatomen bedeutet, wobei pro Siliciumatom maximal ein Rest R die Bedeutung von Wasserstoffatom haben kann,

$R^1$   gleich oder verschieden sein kann und SiC-gebundener, aliphatisch ungesättigter Kohlenwasserstoffrest mit 2 bis 18 Kohlenstoffatomen bedeutet,

R$^2$ gleich oder verschieden sein kann und Wasserstoffatom oder gegebenenfalls substituierter Kohlenwasserstoffrest mit 1 bis 18 Kohlenstoffatomen, der mit Sauerstoffatomen unterbrochen sein kann, bedeutet,

a 0, 1, 2 oder 3 ist,
b 0, 1, 2 oder 3 ist,
c 0, 1, 2 oder 3 ist,

die Summe aus a, b und c in Formel (I) kleiner oder gleich 3 ist und pro Molekül mindestens ein Rest R$^1$ anwesend ist, dadurch gekennzeichnet, daß es sich um solche handelt ausgewählt aus
Verbindungen der Formel

$$(R_3SiO)_d\ (R_2R^1SiO)_e\ (OH)_f\ Si \tag{Ia},$$

wobei

d 0, 1, 2 oder 3 ist,
e 1, 2 oder 3 ist,
f 0, 1 oder 2 ist und

die Summe d+e+f gleich 4 ist,
und
Verbindungen der Formel

$$[(R_3SiO)_g\ (R_2R^1SiO)_h\ (OH)_iSi]_2\ O \tag{Ib},$$

wobei

g gleich oder verschieden sein kann und 0, 1, 2 oder 3 ist,
h gleich oder verschieden sein kann und 0, 1, 2 oder 3 ist,
i gleich oder verschieden sein kann und 0, 1 oder 2 ist und

die Summe g+h+i an einem jeden Siliciumatom gleich 3 ist und pro Molekül mindestens ein Rest R$^1$ anwesend ist.

2. Niedermolekulare Organosiliciumverbindungen gemäß Anspruch 1, dadurch gekennzeichnet, daß R$^1$ die Bedeutung von Vinylrest hat.

3. Niedermolekulare Organosiliciumverbindungen gemäß Anspruch 1 oder 2, dadurch gekennzeichnet, daß sie ein Molekulargewicht von höchstens 500 g/mol aufweisen.

4. Niedermolekulare Organosiliciumverbindungen gemäß einem oder mehreren der Ansprüche 1 bis 3, dadurch gekennzeichnet, daß sie pro Molekül mindestens zwei Reste R$^1$ aufweisen.

5. Vernetzbare Massen auf der Basis von Organopolysiloxanen, dadurch gekennzeichnet, daß sie zusätzlich zu Organopolysiloxanen mindestens eine niedermolekulare Organosiliciumverbindung mit 2 bis 17 Siliciumatomen aus Einheiten der Formel

$$R_aR^1{}_b(OR^2)_cSiO_{4-(a+b+c)/2} \tag{I}$$

enthalten, wobei
R, R$^1$, R$^2$, a, b und c eine der in Anspruch 1 angegebenen Bedeutungen haben, mit der Maßgabe, daß
die Summe aus a, b und c in Formel (I) kleiner oder gleich 3 ist und pro Molekül mindestens ein Rest R$^1$ anwesend ist.

6. Vernetzbare Massen auf der Basis von Organopolysiloxanen gemäß Anspruch 5, dadurch gekennzeichnet, daß die niedermolekularen Organosiliciumverbindungen mindestens zwei Reste R$^1$ aufweisen.

**7.** Vernetzbare Massen auf der Basis von Organopolysiloxanen gemäß Anspruch 5 oder 6, dadurch gekennzeichnet, daß die niedermolekularen Organosiliciumverbindungen mindestens drei Reste $R^1$ aufweisen.

**8.** Vernetzbare Massen auf der Basis von Organopolysiloxanen gemäß einem oder mehreren der Ansprüche 5 bis 7, dadurch gekennzeichnet, daß die niedermolekularen Organosiliciumverbindungen ein zahlenmäßiges Verhältnis von M-Einheiten zu der Summe der Q-Einheiten und/oder T-Einheiten von größer oder gleich 2 aufweisen.

**9.** Vernetzbare Massen auf der Basis von Organopolysiloxanen gemäß einem oder mehreren der Ansprüche 5 bis 8, dadurch gekennzeichnet, daß sie peroxidisch vernetzbar sind und

(A) Organopolysiloxane aus Einheiten der allgemeinen Formel

$$R^3_r SiO_{\frac{4-r}{2}} \qquad (II),$$

worin

$R^3$ gleich oder verschieden sein kann und gegebenenfalls substituierter Kohlenwasserstoffrest bedeutet und

$r$ 0, 1, 2 oder 3 ist und einen durchschnittlichen Zahlenwert von 1,9 bis 2,1 hat,

(B) verstärkende und/oder nichtverstärkende Füllstoffe,

(C) die Vernetzung bewirkendes Agens, wie beispielsweise organisches Peroxid,

(D) mindestens eine niedermolekulare aliphatisch ungesättigte Organosiliciumverbindung mit 2 bis 17 Siliciumatomen aus Einheiten der Formel (I)

sowie gegebenenfalls

(E) Additive enthalten.

**10.** Vernetzbare Massen auf der Basis von Organopolysiloxanen gemäß einem oder mehreren der Ansprüche 5 bis 8, dadurch gekennzeichnet, daß sie additionsvernetzbar sind und

(1) Organopolysiloxane mit mindestens 18 Siliciumatomen, die Reste mit aliphatischen Kohlenstoff-Kohlenstoff-Mehrfachbindungen aufweisen,
(2) Organopolysiloxane mit Si-gebundenen Wasserstoffatomen,
(3) die Anlagerung von Si-gebundenem Wasserstoff an aliphatische Mehrfachbindung fördernder Katalysator,
(4) mindestens eine niedermolekulare aliphatisch ungesättigte Organosiliciumverbindung mit 2 bis 17 Siliciumatomen aus Einheiten der Formel (I) und
(5) verstärkende und/oder nicht verstärkende Füllstoffe sowie gegebenenfalls weitere Stoffe enthalten.

**Claims**

**1.** Low molecular mass organosilicon compounds having 2 to 17 silicon atoms, comprising units of the formula

$$R_a R^1_b (OR^2)_c SiO_{4-(a+b+c)/2} \qquad (I),$$

where

R can be identical or different and is hydrogen atom or optionally substituted, SiC-bonded aliphatically saturated hydrocarbon radical of 1 to 18 carbon atoms, where not more than one radical R per silicon atom can have the meaning of hydrogen atom,

$R^1$ can be identical or different and is SiC-bonded, aliphatically unsaturated hydrocarbon radical of 2 to 18 carbon atoms,

18

$R^2$ can be identical or different and is hydrogen atom or optionally substituted hydrocarbon radical of 1 to 18 carbon atoms, which can be interrupted by oxygen atoms,

a    is 0, 1, 2 or 3,
b    is 0, 1, 2 or 3,
c    is 0, 1, 2 or 3,

the sum of a, b and c in formula (I) is less than or equal to 3 and at least one radical $R^1$ is present per molecule, characterized in that the compounds are selected from
compounds of the formula

$$(R_3SiO)_d (R_2R^1SiO)_e (OH)_f Si \qquad\qquad (Ia),$$

where

d    is 0, 1, 2 or 3,
e    is 1, 2 or 3,
f    is 0, 1 or 2 and

the sum d+e+f is equal to 4,
and
compounds of the formula

$$[(R_3SiO)_g(R_2R^1SiO)_h(OH)_iSi]_2 O \qquad\qquad (Ib),$$

where

g    can be identical or different and is 0, 1, 2 or 3,
h    can be identical or different and is 0, 1, 2 or 3,
i    can be identical or different and is 0, 1 or 2, and

the sum g+h+i is equal to 3 at every silicon atom, and at least one radical $R^1$ is present per molecule.

2. Low molecular mass organosilicon compounds according to Claim 1, characterized in that $R^1$ has the meaning of vinyl radical.

3. Low molecular mass organosilicon compounds according to Claim 1 or 2, characterized in that they have a molecular weight of not more than 500 g/mol.

4. Low molecular mass organosilicon compounds according to one or more of Claims 1 to 3, characterized in that they have at least two radicals $R^1$ per molecule.

5. Crosslinkable compositions based on organopolysiloxanes, characterized in that in addition to organopolysiloxanes they comprise at least one low molecular mass organosilicon compound having 2 to 17 silicon atoms, comprising units of the formula

$$R_a R^1{}_b(OR^2)_c SiO_{4-(a+b+c)/2} \qquad\qquad (I),$$

where
R, $R^1$, $R^2$, a, b and c have one of the meanings given in Claim 1, with the proviso that
the sum of a, b and c in formula (I) is less than or equal to 3 and at least one radical $R^1$ is present per molecule.

6. Crosslinkable compositions based on organopolysiloxanes according to Claim 5, characterized in that the low molecular mass organosilicon compound has at least two radicals $R^1$.

7. Crosslinkable compositions based on organopolysiloxanes according to Claim 5 or 6, characterized in that the low molecular mass organosilicon compounds have at least three radicals $R^1$.

8. Crosslinkable compositions based on organopolysiloxanes according to one or more of Claims 5 to 7, characterized in that the low molecular mass organosilicon compounds have a numerical ratio of M units to the sum of the Q units and/or T units of greater than or equal to 2.

9. Crosslinkable compositions based on organopolysiloxanes according to one or more of Claims 5 to 8, characterized in that they are peroxidically crosslinkable and comprise

   (A) organopolysiloxanes comprising units of the general formula

$$R^3_r SiO_{\frac{4-r}{2}} \qquad (II),$$

   in which

   $R^3$    can be identical or different and is optionally substituted hydrocarbon radical, and
   r      is 0, 1, 2 or 3 and has an average numerical value of from 1.9 to 2.1,

   (B) reinforcing and/or nonreinforcing fillers,

   (C) agent which brings about the crosslinking, for example organic peroxide,

   (D) at least one low molecular mass aliphatically unsaturated organosilicon compound having 2 to 17 silicon atoms, comprising units of the formula (I),

   and, if desired,

   (E) additives.

10. Crosslinkable compositions based on organopolysiloxanes according to one or more of claims 5 to 8, characterized in that they are addition-crosslinkable and comprise

    (1) organopolysiloxanes having at least 18 silicon atoms and containing radicals with aliphatic carbon-carbon multiple bonds,
    (2) organopolysiloxanes having Si-bonded hydrogen atoms,
    (3) catalyst which promotes the addition of Si-bonded hydrogen onto aliphatic multiple bond,
    (4) at least one low molecular mass aliphatically unsaturated organosilicon compound having 2 to 17 silicon atoms, comprising units of the formula (I), and
    (5) reinforcing and/or nonreinforcing fillers and, if desired, further substances.

## Revendications

1. Composés organosiliciés à faible poids moléculaire ayant de 2 à 17 atomes de silicium et constitués de motifs de formule

$$R_a R^1_b (OR^2)_c SiO_{4-(a+b+c)/2} \qquad (I),$$

   dans laquelle

   R      peut être identique ou différent et représente un atome d'hydrogène ou un radical hydrocarboné aliphatiquement saturé, lié à SiC, éventuellement substitué, ayant de 1 à 18 atomes de carbone, dans lequel pas plus d'un radical R par atome de silicium peut représenter un atome d'hydrogène,
   $R^1$    peut être identique ou différent et représente un radical hydrocarboné aliphatiquement insaturé, lié à SiC, ayant de 2 à 18 atomes de carbone,

R$^2$ peut être identique ou différent et représente un atome d'hydrogène ou un radical hydrocarboné éventuellement substitué, ayant de 1 à 18 atomes de carbone, qui peut être interrompu par des atomes d'oxygène,

a vaut 0, 1, 2 ou 3,

b vaut 0, 1, 2 ou 3,

c vaut 0, 1, 2 ou 3,

la somme de a, b et c dans la formule (I) est inférieure ou égale à 3 et au moins un radical R$^1$ est présent par molécule, caractérisés en ce que ce sont des composés choisis parmi

des composés de formule

$$(R_3SiO)_d (R_2R^1SiO)_e (OH)_f Si \qquad \text{(Ia)},$$

dans laquelle

d vaut 0, 1, 2 ou 3,

e vaut 1, 2 ou 3,

f vaut 0, 1 ou 2 et

la somme d+e+f est égale à 4,
et
des composés de formule

$$[(R_3SiO)_g (R_2R^1SiO)_h (OH)_i Si]_2 O \qquad \text{(Ib)},$$

dans laquelle

g peut être identique ou différent et vaut 0, 1, 2 ou 3,

h peut être identique ou différent et vaut 0, 1, 2 ou 3,

i peut être identique ou différent et vaut 0, 1 ou 2, et

la somme g+h+i est égale à 3 pour chaque atome de silicium et au moins un radical R$^1$ est présent par molécule.

2. Composés organosiliciés à faible poids moléculaire selon la revendication 1, caractérisés en ce que R$^1$ représente un radical vinyle.

3. Composés organosiliciés à faible poids moléculaire selon la revendication 1 ou 2, caractérisés en ce qu'ils présentent un poids moléculaire d'au plus 500 g/mol.

4. Composés organosiliciés à faible poids moléculaire selon l'une ou plusieurs des revendications 1 à 3, caractérisés en ce qu'ils renferment au moins deux radicaux R$^1$ par molécule.

5. Compositions réticulables à base d'organopolysiloxanes, caractérisées en ce qu'elles contiennent, en plus d'organopolysiloxanes, au moins un composé organosilicié à faible poids moléculaire ayant de 2 à 17 atomes de silicium, constitué de motifs de formule

$$R_a R^1{}_b (OR^2)_c SiO_{4-(a+b+c)/2} \qquad \text{(I)},$$

dans laquelle
R, R$^1$, R$^2$, a, b et c ont l'une des significations indiquées à la revendication 1, à condition que
la somme de a, b et c dans la formule (I) soit inférieure ou égale à 3 et qu'au moins un radical R$^1$ soit présent par molécule.

6. Compositions réticulables à base d'organopolysiloxanes selon la revendication 5, caractérisées en ce que les composés organosiliciés à faible poids moléculaire renferment au moins deux radicaux $R^1$.

7. Compositions réticulables à base d'organopolysiloxanes selon la revendication 5 ou 6, caractérisées en ce que les composés organosiliciés à faible poids moléculaire renferment au moins trois radicaux $R^1$.

8. Compositions réticulables à base d'organopolysiloxanes selon l'une ou plusieurs des revendications 5 à 7, caractérisées en ce que les composés organosiliciés à faible poids moléculaire présentent un rapport numérique entre les motifs M et la somme des motifs Q et/ou des motifs T supérieur ou égal à 2.

9. Compositions réticulables à base d'organopolysiloxanes selon l'une ou plusieurs des revendications 5 à 8, caractérisées en ce qu'elles sont réticulables par des peroxydes et contiennent

(A) des organopolysiloxanes à base de motifs de formule générale

$$R^3{}_r SiO_{\frac{4-r}{2}} \qquad (II),$$

dans laquelle

$R^3$ peut être identique ou différent et représente un radical hydrocarboné éventuellement substitué et
r vaut 0, 1, 2 ou 3 et a une valeur numérique moyenne de 1,9 à 2,1,

(B) des charges renforçantes et/ou non renforçantes,
(C) un agent provoquant la réticulation, comme par exemple un peroxyde organique,
(D) au moins un composé organosilicié aliphatiquement insaturé à faible poids moléculaire ayant de 2 à 17 atomes de silicium et constitué de motifs de formule (I),

et éventuellement

(E) des additifs.

10. Compositions réticulables à base d'organopolysiloxanes selon l'une ou plusieurs des revendications 5 à 8, caractérisées en ce qu'elles sont réticulables par addition et contiennent

(1) des organopolysiloxanes ayant au moins 18 atomes de silicium, qui renferment des radicaux ayant des liaisons multiples carbone-carbone aliphatiques,
(2) des organopolysiloxanes ayant des atomes d'hydrogène liés à Si,
(3) un catalyseur qui favorise l'addition d'hydrogène lié à Si sur une liaison multiple aliphatique,
(4) au moins un composé organosilicié aliphatiquement insaturé à faible poids moléculaire, ayant de 2 à 17 atomes de silicium et constitué de motifs de formule (I), et
(5) des charges renforçantes et/ou non renforçantes et éventuellement d'autres substances.